# EUROPÄISCHE PATENTANMELDUNG

(11) **EP 3 890 171 A1**
(43) Veröffentlichungstag der Anmeldung: **06.10.2021**
(21) Anmeldenummer: 20167764.8
(22) Anmeldetag: 02.04.2020
(51) Int. Cl.: H02K 41/03, H02K 11/215, G01D 5/14

(54) **VERFAHREN ZUM STEUERN EINES PLANARANTRIEBSSYSTEMS UND PLANARANTRIEBSSYSTEM**

(71) Anmelder: Beckhoff Automation GmbH, 33415 Verl (DE)
(72) Erfinder: MAGUIRE, Keir, Vancouver, British Columbia V6K 4S7 (CA); KAULMANN, Tim, 33104 Paderborn (DE); BENTFELD, Lukas, 33129 Delbrück (DE); NEUMANN, Klaus, 33330 Gütersloh (DE); JURKE, Benjamin, 33332 Gütersloh (DE)
(74) Vertreter: Patentanwaltskanzlei WILHELM & BECK

(57) **Zusammenfassung**

Die Erfindung betrifft ein Verfahren (100) zum Steuern eines Planarantriebssystems (200), umfassend:
Generieren einer Positionszuordnungsfunktion (205) in einem Zuordnungsgenerierungsschritt (101);
Messen einer Mehrzahl von Messwerten des Läufermagnetfelds (402) durch Magnetfeldsensoren (501) für eine Position des Läufers (400) relativ zum Statormodul (300) in einem Läufermagnetfeldbestimmungsschritt (103);
Anwenden der Positionsbestimmungsfunktion (205) auf die Mehrzahl von Messwerten des Läufermagnetfelds (402) der Mehrzahl von Magnetfeldsensoren (501) in einem Messwertanalyseschritt (105); und
Bestimmen der Position des Läufers (400) relativ zum Statormodul (300) auf Basis der von der Mehrzahl von Magnetfeldsensoren (501) gemessenen Messwerte des Läufermagnetfels und auf Basis der Zuordnungen der Positionszuordnungsfunktion (205) in einem Positionsbestimmungsschritt (107).

Die Erfindung betrifft ferner ein Planarantriebssystem (200).

## Beschreibung

Die Erfindung betrifft ein Verfahren zum Steuern eines Planarantriebssystems und ein Planarantriebssystem, das eingerichtet ist, das Verfahren zum Steuern eines Planarantriebssystems auszuführen.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Leiter mit Antriebsmagneten einer Magnetanordnung magnetisch wechselwirken. Die Erfindung betrifft insbesondere Ausgestaltungen von Planarantriebssystemen, bei denen die Antriebsmagneten eines elektrischen Planarmotors an dem Läufer und die stromdurchflossenen Leiter des Planarmotors in einem ortsfest angeordneten planaren Stator angeordnet sind.

Bei einem derartigen Antriebssystem umfasst der Läufer mindestens eine erste Magneteinheit für den Antrieb des Läufers in eine erste Richtung und eine zweite Magneteinheit für den Antrieb des Läufers in eine von der ersten Richtung linear unabhängige, beispielsweise in eine zu der ersten Richtung orthogonale, zweite Richtung. Der planare Stator umfasst mindestens eine Gruppe erster bestrombarer Leiter, welche mit den Magneten der ersten Magneteinheit magnetisch wechselwirken, um den Läufer in die erste Richtung anzutreiben, sowie eine Gruppe zweiter bestrombarer Leiter, welche mit den Magneten der zweiten Magneteinheit magnetisch wechselwirken, um den Läufer in die zweite Richtung anzutreiben. Die ersten und zweiten Gruppen von Leitern sind in der Regel unabhängig voneinander bestrombar, um voneinander unabhängige Bewegungen des Läufers in die erste und zweite Richtung zu ermöglichen. Sind die Leiter der ersten und zweiten Gruppe selbst zumindest in Teilen unabhängig voneinander bestrombar, können auf einem Stator zeitgleich mehrere Läufer unabhängig voneinander bewegt werden.

Die Druckschriften WO 2013/059934 A1, WO 2015/017933 A1, WO 2015/179962 A1, WO 2015/184553 A1, WO 2015/188281 A1, WO 2017/004716 A1 beschreiben jeweils Planarantriebssysteme (*displacement devices*), welche einen elektromagnetischen Planarmotor mit einem permanenterregten Läufer und einem mehrere bestrombare Leiter umfassenden Stator umfassen.

Zur Steuerung eines Läufers eines Planarantriebssystems ist es maßgeblich, eine Position des Läufers relativ zu dem Statormodul beziehungsweise zu den Statormodulen des Planarantriebssystems bestimmen zu können. Hierzu weist jedes Statormodul wenigstens ein Sensormodul mit einer Mehrzahl von Magnetfeldsensoren auf, die eingerichtet sind, das Magnetfeld des Läufers zu detektieren, wodurch eine Positionsbestimmung des Läufers relativ zu dem jeweiligen Sensormodul beziehungsweise relativ zu dem jeweiligen Statormodul ermöglicht wird. Je präziser eine solche Bestimmung einer Position des Läufers durchgeführt werden kann, desto präziser kann eine Steuerung des Planarantriebssystems erfolgen.

Es ist daher eine Aufgabe der Erfindung, ein Verfahren zum Steuern eines Planarantriebssystems bereitzustellen, das aufgrund einer verbesserten Positionsbestimmung eines Läufers ein verbessertes und präziseres Steuern des Läufers ermöglicht. Eine weitere Aufgabe der Erfindung ist es, ein Planarantriebssystem bereitzustellen, das eingerichtet ist, das erfindungsgemäße Verfahren auszuführen.

Die Aufgaben werden durch ein Verfahren zum Steuern eines Planarantriebssystems und ein Planarantriebssystem gemäß den unabhängigen Ansprüchen gelöst. Bevorzugte Ausführungsformen sind in den abhängigen Ansprüchen angegeben.

Nach einem Aspekt der Erfindung wird ein Verfahren zum Steuern eines Planarantriebssystems bereitgestellt, wobei das Planarantriebssystem wenigstens eine Steuereinheit, ein Statormodul und einen Läufer umfasst, wobei das Statormodul eingerichtet ist, zum elektrischen Steuern des Läufers Statormagnetfelder zu generieren, wobei der Läufer eine Magnetanordnung zum Generieren eines Läufermagnetfelds aufweist, wobei über die Statormagnetfelder und das Läufermagnetfeld eine magnetische Kopplung zwischen dem Läufer und dem Statormodul erzielbar ist, wobei das Statormodul zum Bestimmen einer Position des Läufers ein Sensormodul mit einer Mehrzahl von Magnetfeldsensoren umfasst, wobei die Magnetfeldsensoren in einer zweidimensionalen Anordnung am Statormodul angeordnet sind, und wobei jeder Magnetfeldsensor eingerichtet ist, für einen Raumbereich in der zweidimensionalen Anordnung das Läufermagnetfeld zu bestimmen, umfassend:
Generieren einer Positionszuordnungsfunktion in einem Zuordnungsgenerierungsschritt, wobei die Positionszuordnungsfunktion eingerichtet ist, einer Mehrzahl von Messwerten des Läufermagnetfelds 402 einer Mehrzahl von Magnetfeldsensoren 501 des Sensormoduls 500 eine Positionen des Läufers relativ zum Statormodul zuzuordnen;
Messen einer Mehrzahl von Messwerten des Läufermagnetfelds durch Magnetfeldsensoren für eine Position des Läufers relativ zum Statormodul in einem Läufermagnetfeldbestimmungsschritt;
Anwenden der Positionszuordnungsfunktion auf die Mehrzahl von Messwerten des Läufermagnetfelds der Magnetfeldsensoren in einem Messwertanalyseschritt; und
Bestimmen der Position des Läufers relativ zum Statormodul durch die Positionszuordnungsfunktion in einem Positionsbestimmungsschritt.

Hierdurch wird der technische Vorteil erreicht, dass ein effizientes und effektives Verfahren zum Steuern eines Planarantriebssystems bereitgestellt werden kann, bei dem eine präzise Positionsbestimmung des Läufers relativ zum Statormodul erzielt werden kann.

Über die Positionszuordnungsfunktion können Zuordnungen zwischen einer Position des Läufers relativ zum Statormodul und Messwerten des Läufermagnetfelds, die von einer Mehrzahl der Magnetfeldsensoren des Sensormoduls des Statormoduls für die jeweilige Position des Läufers relativ zum Statormodul gemessen werden, generiert werden. Über die Zuordnungen zwischen den Positionen des Läufers relativ zum Statormodul und den für die jeweilige Position von einer Mehrzahl von Magnetfeldsensoren des Sensormoduls gemessenen Messwerten des Läufermagnetfelds kann eindeutig bestimmt werden, welche Messwerte des Läufermagnetfelds eine bestimmte Mehrzahl von Magnetfeldsensoren des Sensormoduls für eine bestimmte Position des Läufers relativ zum Statormodul messen werden.

Umgekehrt kann für eine Mehrzahl von Messwerten des Läufermagnetfelds, die von entsprechenden Magnetfeldsensoren des Sensormodul gemessenen werden, eine Position des Läufers relativ zum Statormodul bestimmt werden. Durch entsprechende Messungen mehrerer Messwerte des Läufermagnetfelds durch ausgewählte Magnetfeldsensoren des Sensormoduls und durch Anwendung der Positionszuordnungsfunktion auf die durch die Mehrzahl von Magnetfeldsensoren gemessenen Messwerte des Läufermagnetfelds kann durch die Positionszuordnungsfunktion den Messwerten des Läufermoduls unter Berücksichtigung der Anordnung der entsprechenden Magnetfeldsensoren, durch die die Mehrzahl der Messwerte gemessen wird, am Statormodul eine Position des Läufers relativ zum Statormodul zugeordnet werden. Hierdurch kann eine präzise Positionsbestimmung auf Basis einer Mehrzahl von Messwerten des jeweiligen Läufermagnetfelds erreicht werden.

Eine Zuordnung ist im Sinne der Anmeldung eine eindeutige Relation zwischen einer Position des Läufers relativ zum Statormodul und Messwerten des Läufermagnetfelds, die von einer Mehrzahl von Magnetfeldsensoren des Sensormoduls erfasst werden. Die Mehrzahl von Magnetfeldsensoren kann die gesamten Magnetfeldsensoren des Sensormoduls umfassen. Alternativ kann die Mehrzahl eine Untermenge der Gesamtanzahl der Magnetfeldsensoren des Sensormoduls umfassen. Für verschiedene Positionen des Läufers relativ zum Statormodul können insbesondere verschiedene Magnetfeldsensoren in der Mehrzahl von Magnetfeldsensoren, die Messwerte des Läufermagnetfelds aufnehmen, umfasst sein.

Die Positionszuordnungsfunktion ist im Sinne der Anmeldung ein Modul, das die Zuordnungen zwischen Positionen des Läufers relativ zum Statormodul und Messwerten des Läufermagnetfelds einer entsprechen Mehrzahl von Magnetfeldsensoren umfasst beziehungsweise generiert. Die Positionszuordnungsfunktion kann ein entsprechend trainiertes künstliches neuronales Netz sein.

Alternativ kann die Positionszuordnungsfunktion eine mathematische Funktion sein, in der entsprechende Zuordnungen integriert sind und die eingerichtet ist, gemäß dem Messwertanalyseschritt gemessenen Messwerten des Läufermagnetfelds entsprechende Positionen des Läufermagnetfelds zuzuordnen.

Ein Magnetfeldsensor ist im Sinne der Anmeldung ein Hall-Sensor und kann insbesondere als ein eindimensionaler, zweidimensionaler oder dreidimensionaler Hallsensor ausgestaltet sein.

Ein Messwert des Läufermagnetfelds ist im Sinne der Anmeldung ein Messwert eines eindimensionalen, zweidimensionalen oder dreidimensionalen Hallsensors und kann dementsprechend ein eindimensionaler, zweidimensionaler oder dreidimensionaler Wert des Läufermagnetfelds sein und Komponenten des Läufermagnetfelds bezüglich einer, zwei oder drei Raumrichtungen umfassen.

Nach einer Ausführungsform umfasst der Zuordnungsgenerierungsschritt:
Messen einer Mehrzahl von Messwerten des Läufermagnetfelds durch eine Magnetfeldmessanordnung in einem Läufermagnetfeldvermessungsschritt, wobei durch die Mehrzahl von Messwerten des Läufermagnetfelds eine dreidimensionale Vermessung des Läufermagnetfelds bestimmt ist;
Bestimmen auf Basis der dreidimensionalen Vermessung des Läufermagnetfelds einer Mehrzahl von Werten des Läufermagnetfelds für eine Mehrzahl von Magnetfeldsensoren des Sensormoduls für eine Mehrzahl von Positionen des Läufers relativ zum Statormodul in einem Sensorwertbestimmungsschritt, wobei für jede der Mehrzahl von Positionen des Läufers relativ zum Statormodul jedem Magnetfeldsensor der Mehrzahl von Magnetfeldsensoren des Sensormoduls gemäß der dreidimensionalen Vermessung des Läufermagnetfelds ein Wert des Läufermagnetfelds zugeordnet wird; und
Bestimmen einer Mehrzahl von Zuordnungen auf Basis der Mehrzahl von Werten des Läufermagnetfelds für eine Mehrzahl von Magnetfeldsensoren des Sensormoduls und der Mehrzahl von Positionen des Läufers in einem Zuordnungsbestimmungsschritt.

Hierdurch wird der technische Vorteil erreicht, dass eine präzise Positionsbestimmung des Läufers relativ zum Statormodul erreicht wird. Durch die Messungen der Mehrzahl von Messwerten des Läufermagnetfelds im Läufermagnetfeldvermessungsschritt kann eine dreidimensionale Vermessung des Läufermagnetfelds erreicht werden. Hierdurch kann eine präzise dreidimensionale Bestimmung des Läufermagnetfelds erreicht werden. Auf Basis der präzisen Kenntnis des Läufermagnetfelds ist eine Vorhersage von Werten des Läufermagnetfelds, die für eine bestimmte Position des Läufers relativ zum Statormodul in Raumbereichen der Magnetfeldsensoren des Sensormoduls zu erwarten sind, möglich.

Aufgrund der Kenntnis der Lage jedes einzelnen Magnetfeldsensors innerhalb des Statormoduls und der Kenntnis der dreidimensionalen Ausgestaltung des Läufermagnetfelds kann für eine bestimmte Position des Läufers relativ zum Statormodul für jeden Raumbereich eines Magnetfeldsensors des Sensormoduls exakt ein Wert des Läufermagnetfelds vorhergesagt werden. Dies lässt eine präzise Zuordnung zwischen Positionen des Läufers relativ zum Statormodul und von den jeweiligen Magnetfeldsensoren des Sensormoduls zu messenden Messwerten des Läufermagnetfelds durch die Positionszuordnungsfunktion zu. Je präziser die Kenntnis der dreidimensionalen Ausgestaltung des Läufermagnetfelds, die durch entsprechende Messungen im Läufermagnetfeldbestimmungsschritt ermittelt wird, ist, desto präziser ist die Vorhersage der für bestimmte Positionen des Läufers relativ zum Statormodul von den jeweiligen Magnetfeldsensoren des Sensormoduls zu messenden Werte des Läufermagnetfelds. Hierdurch kann eine Präzisierung der Positionsbestimmung des Läufers relativ zum Statormodul erreicht werden. Durch eine präzisere Positionsbestimmung des Läufers kann wiederum eine verbesserte und insbesondere präzisere Steuerung des Planarantriebssystems erreicht werden.

Durch die dreidimensionale Vermessung des Läufermagnetfelds durch die Magnetfeldmessanordnung kann die Bestimmung des Läufermagnetfelds für jeden Läufer des Planarantriebssystems individuell bestimmt werden. Hierdurch können produktionsbedingte Abweichungen des Läufermagnetfelds für verschiedene Läufer des Planarantriebssystems berücksichtigt werden. Hierdurch ist eine präzisere Vorhersage der für bestimmte Positionen der einzelnen Läufer für die jeweiligen Magnetfeldsensoren zu erwartenden Werte der jeweiligen Läufermagnetfelder ermöglicht. Hierdurch ist wiederum eine präzisere Positionsbestimmung und damit verbunden eine präzisere und akkuratere Steuerung der Läufer des Planarantriebssystems erreicht.

Darüber hinaus kann die dreidimensionale Vermessung der Läufermagnetfelder der einzelnen Läufer des Planarantriebssystems vor Betrieb des Planarantriebssystems durchgeführt werden. Hierdurch kann eine störungsfreie Initialisierungsphase des Planarantriebssystems erzielt werden, bei der aufgrund der detaillierten Kenntnis der einzelnen Läufermagnetfelder der jeweiligen Läufer des Planarantriebssystems bereits in der Initialisierungsphase des Planarantriebssystems eine präzise Positionsbestimmung einzelner Läufer und damit verbunden eine präzise Steuerung einzelner Läufer des Planarantriebssystems erreicht werden kann.

Nach einer Ausführungsform ist im Läufermagnetfeldvermessungsschritt die dreidimensionale Vermessung des Läufermagnetfelds durch eine dreidimensionale Anordnung diskreter Messpunkte des Läufermagnetfelds realisiert.

Hierdurch wird der technische Vorteil erreicht, dass eine einfache und präzise Bestimmung des Läufermagnetfelds des Läufers erzielt werden kann. Die dreidimensionale Anordnung diskreter Messpunkte kann als ein dreidimensionales Gitter von Messpunkten des Läufermagnetfelds realisiert sein. An jedem Gitterpunkt beziehungsweise Messpunkt der dreidimensionalen Anordnung können verschiedene Messwerte des Läufermagnetfelds durch entsprechende Messungen von an den jeweiligen Messpunkten angeordneten Magnetfeldsensoren aufgenommen werden.

Hierdurch können für verschiedene dreidimensional angeordnete Raumpunkte Messwerte des Läufermagnetfelds aufgenommen werden. Dies ermöglicht eine dreidimensionale Vermessung des Läufermagnetfelds und damit eine Kenntnis der dreidimensionalen Ausgestaltung des jeweiligen Läufermagnetfelds. Durch eine Anzahl der Messpunkte der dreidimensionalen Anordnung diskreter Messpunkte kann eine Präzisierung der dreidimensionalen Vermessung des Läufermagnetfelds variiert werden. Dies ermöglicht eine hohe Flexibilität der Bestimmung des Läufermagnetfelds, indem in charakteristischen Bereichen des Läufermagnetfelds eine hohe Dichte von Messpunkten und in weniger charakteristischen Bereichen des Läufermagnetfelds eine niedrige Dichte von Messpunkten realisiert werden kann. Hierdurch kann eine dreidimensionale Vermessung des Läufermagnetfelds präzisiert und gleichzeitig beschleunigt werden.

Nach einer Ausführungsform ist die Magnetfeldmessanordnung in drei Raumdimensionen verfahrbar und umfasst einen einzelnen Magnetfeldsensor und/oder eine eindimensionale Magnetfeldsensoranordnung und/oder eine zweidimensionale Magnetfeldsensoranordnung und/oder eine dreidimensionale Magnetfeldsensoranordnung, wobei die dreidimensionale Anordnung diskreter Messpunkte durch Messungen der Magnetfeldsensoren der in drei Raumdimensionen verfahrbaren Magnetfeldsensoranordnung realisiert wird.

Hierdurch wird der technische Vorteil erreicht, dass eine präzise dreidimensionale Vermessung des Läufermagnetfelds realisiert werden kann. Durch die Magnetfeldmessanordnung, die eine Mehrzahl von Magnetfeldsensoreinheiten umfasst und die in drei Raumdimensionen verfahrbar ist, kann eine beliebig ausgestaltete dreidimensionale Anordnung diskreter Messpunkte realisiert werden. Durch die in drei Raumdimensionen verfahrbare Magnetfeldmessanordnung können einzelne Magnetfeldsensoreinheiten der Magnetfeldmessanordnung an beliebigen Raumpunkten relativ zum zu vermessenden Läufer positioniert werden, sodass für beliebige Raumpunkte relativ zum jeweiligen Läufer Messwerte des entsprechenden Läufermagnetfelds aufgenommen werden können. Durch das Verfahren in drei Raumdimensionen der Magnetfeldmessanordnung kann somit eine beliebig genaue dreidimensionale Vermessung des Läufermagnetfelds erzielt werden. Insbesondere kann für jeden zu vermessenden Läufer eine individuelle dreidimensionale Vermessung des jeweiligen Läufermagnetfelds realisiert werden. Hierdurch kann eine erhöhte Flexibilität der Vermessung der Läufermagnetfelder der Läufer des Planarantriebssystems erreicht werden, wobei fertigungsbedingte Unregelmäßigkeiten der einzelnen Läufer berücksichtigt werden können.

Darüber hinaus kann die in drei Raumdimensionen verfahrbare Magnetfeldmessanordnung ermöglichen, dass für jeden Läufer des Läufermagnetfelds eine identische dreidimensionale Anordnung diskreter Messpunkte realisiert wird, sodass hierüber eine erhöhte Vergleichbarkeit der dreidimensionalen Vermessungen verschiedener Läufermagnetfelder verschiedener Läufer erreicht wird. Für jeden Läufer werden somit Messwerte des jeweiligen Läufermagnetfelds an gleichen Raumpunkten relativ zum jeweiligen Läufer aufgenommen. Dies ermöglicht eine vereinfachte Verarbeitung der jeweiligen dreidimensionalen Vermessungen verschiedener Läufermagnetfelder unterschiedlicher Läufer, insbesondere in der Bestimmung der Mehrzahl von Werten des Läufermagnetfelds für die jeweilige Mehrzahl von Magnetfeldsensoren im Sensorwertbestimmungsschritt.

Darüber hinaus ermöglicht die in drei Raumdimensionen verfahrbare Magnetfeldmessanordnung eine erhöhte Reproduzierbarkeit der dreidimensionalen Vermessung der Läufermagnetfelder verschiedener Läufer. Dies ermöglicht eine erhöhte Vergleichbarkeit verschiedener dreidimensionaler Vermessungen unterschiedlicher Läufermagnetfelder. Dies ermöglicht wiederum eine präzisere Bestimmung der zu erwartenden Messwerte des Läufermagnetfelds im Sensorwertbestimmungsschritt, was wiederum zu einer präziseren Positionsbestimmung der einzelnen Läufer des Planarantriebssystems und damit verbunden zu einer akkurateren Steuerung des Planarantriebssystems führt.

Nach einer Ausführungsform umfasst die dreidimensionale Vermessung des Läufermagnetfelds eine Modellbeschreibung der dreidimensionalen Anordnung diskreter Messpunkte, wobei die Modellbeschreibung eine Interpolation der dreidimensionalen Anordnung diskreter Messpunkte umfasst.

Hierdurch wird der technische Vorteil erreicht, dass eine präzise dreidimensionale Vermessung des Läufermagnetfelds und damit verbunden eine präzise Bestimmung der dreidimensionalen Ausgestaltung des Läufermagnetfelds erreicht werden kann. Durch die Interpolation der dreidimensionalen Anordnung diskreter Messpunkte beziehungsweise der an den jeweiligen Messpunkten aufgenommenen Messwerte des zu vermessenden Läufermagnetfelds können Werte des Läufermagnetfelds für beliebige Raumpunkte relativ zum jeweiligen Läufer bestimmt werden, insbesondere für Raumpunkte, die in der dreidimensionalen Vermessung durch die dreidimensionale Anordnung diskreter Messpunkte nicht berücksichtigt wurden. Hierdurch wird eine Präzision der Kenntnis der dreidimensionalen Ausgestaltung des zu vermessenden Läufermagnetfelds erhöht. Durch die erhöhte Kenntnis der dreidimensionalen Ausgestaltung des Läufermagnetfelds wird die Bestimmung der für die einzelnen Magnetfeldsensoren zu erwartenden Werte des Läufermagnetfelds im Sensorwertbestimmungsschritt erhöht. Hierdurch wird eine Präzision der Zuordnung der Positionszuordnungsfunktion erhöht. Dies wiederum trägt zu einer präziseren Positionsbestimmung des Läufers und damit verbunden zu einer akkurateren Steuerung des Läufers beziehungsweise des Planarantriebssystems bei.

Nach einer Ausführungsform umfasst der Läufermagnetfeldbestimmungsschritt:
Auswählen der Mehrzahl von Magnetfeldsensoren aus den Magnetfeldsensoren des Sensormoduls zum Bestimmen des Läufermagnetfelds in einem Magnetfeldsensorauswahlschritt, wobei die Bestimmung des Läufermagnetfelds auf Messwerte der ausgewählten Magnetfeldsensoren beschränkt ist.

Hierdurch wird der technische Vorteil erreicht, dass eine präzise Positionsbestimmung des Läufers relativ zum Statormodul erreicht werden kann. Durch die Auswahl der Mehrzahl von Magnetfeldsensoren, die zum Bestimmen des Läufermagnetfelds zur Positionsbestimmung des Läufers relativ zum Statormodul berücksichtigt werden, kann eine Präzisierung der Positionsbestimmung des Läufers relativ zum Statormodul erreicht werden. Beispielsweise können ausschließlich die Magnetfeldsensoren des Sensormoduls zur Messung des Läufermagnetfelds zur Bestimmung der Position des Läufers relativ zum Statormodul ausgewählt werden, die in der jeweiligen Position vom Läufer abgedeckt werden, kann die Messung des Läufermagnetfelds durch die Magnetfeldsensoren präzisiert werden.

Die Magnetfeldsensoren sind eingerichtet, eine Punktmessung des Läufermagnetfelds durchzuführen. Darüber hinaus ist das Läufermagnetfeld des Läufers ausgestaltet, einen primären Beitrag in Richtung senkrecht zur Unterseite des Läufers aufzuweisen. Zur Messung des Läufermagnetfelds durch die Magnetfeldsensoren des Sensormoduls sind somit primär die Magnetfeldsensoren ausschlaggebend, die unmittelbar unterhalb des Läufers positioniert sind. Indem ausschließlich diese Magnetfeldsensoren zur Bestimmung des Läufermagnetfelds ausgewählt werden, kann vermieden werden, dass durch Messwerte von zum Läufer entfernt positionierten Magnetfeldsensoren die Messungen des Läufermagnetfelds verfälscht werden. Insbesondere bei einer Mehrzahl von Läufern kann somit eine Präzisierung der Positionsbestimmung einzelner Läufer verbessert werden. Darüber hinaus kann hierdurch eine Beschleunigung der Bestimmung des jeweiligen Läufermagnetfelds erreicht werden, indem die zu berücksichtigende Anzahl von Magnetfeldsensoren auf die relevanten Magnetfeldsensoren reduziert wird.

Alternativ können zusätzlich Magnetfeldsensoren ausgewählt werden, die nicht vom Läufer abgedeckt werden jedoch in direkter Nachbarschaft zum Läufer angeordnet sind.

Darüber hinaus kann erreicht werden, dass ausschließlich die Magnetfeldsensoren zur Positionsbestimmung ausgewählt werden, die zur Messung des Läufermagnetfelds des jeweiligen Läufers benötigt werden. Die Berücksichtigung von Magnetfeldsensoren, die aufgrund ihrer Entfernung zu der jeweiligen Position des Läufers keinen relevanten Beitrag zur Bestimmung des Läufermagnetfelds beitragen können, kann somit vermieden werden. Hierdurch kann eine Präzisierung der Bestimmung des Läufermagnetfelds und damit verbunden eine Präzisierung der Positionsbestimmung des Läufers erhöht werden.

Darüber hinaus kann die Rechenleistung, die zur Auswertung der Messwerte der Magnetfeldsensoren zur Positionsbestimmung des Läufers benötigt wird, verringert werden, indem nur Magnetfeldsensoren berücksichtigt werden, die in direkter räumlicher Umgebung zum Läufer angeordnet sind.

Nach einer Ausführungsform ist die Positionszuordnungsfunktion als ein künstliches neuronales Netz ausgebildet, wobei das Verfahren ferner umfasst:
Trainieren des Neuronalen Netzes auf die im Sensorwertbestimmungsschritt für die Mehrzahl von Positionen des Läufers relative zum Statormodul bestimmten Werte des Läufermagnetfelds für die Mehrzahl von Magnetfeldsensoren des Sensormoduls in einem Trainingsschritt, wobei durch das Training das Neuronale Netz eingerichtet ist, auf Basis der im Sensorwertbestimmungsschritt für die Mehrzahl von Positionen des Läufers relativ zum Statormodul bestimmten Werte des Läufermagnetfelds den im Läufermagnetfeldbestimmungsschritt gemessenen Mehrzahl von Messwerten des Läufermagnetfelds eine Position des Läufers (400) relativ zum Statormodul zuzuordnen.

Hierdurch wird der technische Vorteil erreicht, dass eine echtzeitfähige Positionsbestimmung des Läufers relativ zum Statormodul ermöglicht ist. Durch die Ausbildung der Positionszuordnungsfunktion als ein künstliches neuronales Netz kann die Positionsbestimmung des Läufers auf Basis der Mehrzahl von Messwerten des Läufermagnetfelds der Mehrzahl von der Magnetfeldsensoren innerhalb eines vorbestimmten Zeitintervalls abgeschlossen werden. Somit kann die Positionsbestimmung insbesondere innerhalb eines Steuerzyklus des Planarantriebssystems abgeschlossen sein. Dies ermöglich eine hocheffiziente Steuerung des Planarantriebssystems.

Über den Trainingsprozess können in das Neuronale Netz eine Mehrzahl von Zuordnungen zwischen verschiedenen Positionen des Läufers relativ zum Statormodul und entsprechenden Messwerten des Läufermagnetfelds, die von Magnetfeldsensoren des Sensormoduls aufgenommen werden, in das Neuronale Netz integriert werden, sodass das Neuronale Netz auf Basis dieser erlernten Zuordnungen neu aufgenommenen Messwerten des Läufermagnetfelds eine entsprechende Position des Läufers relativ zum Statormodul zuordnen kann.

Nach einer Ausführungsform umfasst das Planarantriebssystem wenigstens einen weiteren Läufer, wobei der weitere Läufer ein weiteres Läufermagnetfeld aufweist, und wobei das erfindungsgemäße Verfahren zum Steuern eines Planarantriebssystems ferner umfasst:
Generieren einer weiteren Positionszuordnungsfunktion im Zuordnungsgenerierungsschritt, wobei die weitere Positionszuordnungsfunktion eine Mehrzahl von weiteren Zuordnungen zwischen Positionen des weiteren Läufers relativ zum Statormodul und Messwerten des weiteren Läufermagnetfelds von einer Mehrzahl von Magnetfeldsensoren des Sensormoduls umfasst, und wobei in jeder weiteren Zuordnung der weiteren Positionszuordnungsfunktion für eine Position des weiteren Läufers relativ zum Statormodul jedem Magnetfeldsensor der Mehrzahl von Magnetfeldsensoren des Sensormoduls eindeutig ein Wert des weiteren Läufermagnetfelds zugeordnet ist;
Messen einer Mehrzahl von Messwerten des weiteren Läufermagnetfelds durch Magnetfeldsensoren des Sensormoduls für eine Position des weiteren Läufers relativ zum Statormodul im Läufermagnetfeldbestimmungsschritt;
Anwenden der weiteren Positionszuordnungsfunktion auf die Mehrzahl von Messwerten des weiteren Läufermagnetfelds der Magnetfeldsensoren mit den weiteren Zuordnungen der weiteren Positionszuordnungsfunktion im Messwertanalyseschritt, wobei in jeder weiteren Zuordnung der weiteren Positionszuordnungsfunktion für eine Position des weiteren Läufers relativ zum Statormodul jedem Magnetfeldsensor der Mehrzahl von Magnetfeldsensoren des Sensormoduls eindeutig ein Wert des weiteren Läufermagnetfelds zugeordnet ist; und
Bestimmen der Position des weiteren Läufers relativ zum Statormodul auf Basis der von der Mehrzahl von Magnetfeldsensoren gemessenen Messwerte des weiteren Läufermagnetfels und auf Basis der weiteren Zuordnungen der weiteren Positionszuordnungsfunktion im Positionsbestimmungsschritt.

Hierdurch wird der technische Vorteil erreicht, dass für eine Mehrzahl von Läufern eine präzise und akkurate Positionsbestimmung ermöglicht ist. Indem jedem Läufer eine individuelle Positionszuordnungsfunktion zugewiesen ist, kann für jeden Läufer eine präzise Positionsbestimmung und damit verbunden eine präzise und akkurate Steuerung erreicht werden. Insbesondere bei der Ausführungsform der Positionszuordnungsfunktion als künstliches neuronales Netz kann jedem Läufer ein individuelles künstliches neuronales Netz zugewiesen werden, das mit den jeweiligen Messwerten der dreidimensionalen Vermessung des jeweiligen Läufermagnetfelds und den damit verbundenen Bestimmungen der zu erwartenden Messwerte der jeweils zur Positionsbestimmung ausgewählten Magnetfeldsensoren trainiert worden ist. Über jedes individuelle künstliche neuronale Netz kann somit für jeden Läufer des Planarantriebssystems individuell eine präzise Positionsbestimmung erreicht werden. Insbesondere können durch die individuelle dreidimensionale Vermessung des jeweiligen Läufermagnetfelds und die damit verbundene individuelle Ausgestaltung des jeweiligen künstlichen neuronales Netzes produktionsbedingte Abweichungen der einzelnen Läufermagnetfelder der verschiedenen Läufer des Planarantriebssystems in der Positionsbestimmung berücksichtigt werden.

Indem für jeden Läufer des Planarantriebssystems eine individuelle dreidimensionale Vermessung des jeweiligen Läufermagnetfelds durchgeführt wird, können produktionsbedingte Abweichungen der Läufermagnetfelder einzelner Läufer bei der Positionsbestimmung berücksichtigt werden.

Indem für jeden Läufer des Planarantriebssystems eine individuelle Mehrzahl von Magnetfeldsensoren zur Messung des jeweiligen Läufermagnetfelds ausgewählt wird, kann für jeden Läufer des Planarantriebssystems eine präzise Bestimmung des Läufermagnetfelds und damit verbunden eine präzise Bestimmung der Position des jeweiligen Läufers relativ zum Statormodul erreicht werden.

Im Läufermagnetfeldvermessungsschritt wird für jeden Läufer des Planarantriebssystems individuell eine dreidimensionale Vermessung des jeweiligen Läufermagnetfelds durchgeführt. Im Sensorwertbestimmungsschritt wird für jeden Läufer des Planarantriebssystems individuell auf Basis der dreidimensionalen Vermessung des Läufermagnetfelds eine Mehrzahl von Werten des Läufermagnetfelds für eine Mehrzahl von Magnetfeldsensoren des Sensormoduls bestimmt. Im Zuordnungsbestimmungsschritt wird für jeden Läufer des Planarantriebssystems eine Mehrzahl von Zuordnungen auf Basis der Mehrzahl von Werten des Läufermagnetfelds für eine Mehrzahl von Magnetfeldsensoren und auf Basis der Mehrzahl von Positionen des Läufers bestimmt. Im Magnetfeldsensorauswahlschritt wird für jeden Läufer des Planarantriebssystems eine Mehrzahl von Magnetfeldsensoren zum Bestimmen des Läufermagnetfelds ausgewählt.

Nach einer Ausführungsform umfasst das erfindungsgemäße Verfahren ferner:
Erstellen eines Zuordnungsdatensatzes in einem Zuordnungsdatensatzerstellungsschritt, wobei der Zuordnungsdatensatz die im Zuordnungsgenerierungsschritt bestimmte Positionszuordnungsfunktion und/oder die entsprechenden Zuordnungen zwischen Positionen des Läufers relativ zum Statormodul und
Messwerten des Läufermagnetfelds von einer Mehrzahl von Magnetfeldsensoren des Sensormoduls umfasst.

Hierdurch wird der technische Vorteil erreicht, dass die bestimmte Positionszuordnungsfunktion und/oder die entsprechenden Zuordnungen zwischen Positionen des Läufers relativ zum Statormodul und Messwerten des Läufermagnetfelds für ein erneutes Durchführen des erfindungsgemäßen Verfahrens wiederverwendet werden können. Damit kann das Verfahren bei erneuter Durchführung vereinfacht und beschleunigt werden. Die Positionszuordnungsfunktion und/oder die entsprechenden Zuordnungen können im Positionsbestimmungsschritt entsprechend verwendet werden.

Der Zuordnungsgenerierungsschritt kann werkseitig durchgeführt werden, sodass ein Nutzer des Planarantriebssystems auf Basis des erstellten Zuordnungsdatensatzes, den der Nutzer beispielsweise von einem Server herunterladen kann, das erfindungsgemäße Verfahren und insbesondere den Positionsbestimmungsschritt mit der entsprechenden Positionszuordnungsfunktion und/oder den entsprechenden Zuordnungen durchführen kann.

Der Zuordnungsdatensatz kann in der Steuereinheit und/oder in einem am Läufer angeordneten Prozessoreinheit/Speichereinheit und/oder in einer externen Prozessoreinheit/Speichereinheit des Planarantiebssystems gespeichert sein.

Nach einer Ausführungsform umfasst das erfindungsgemäße Verfahren ferner:
Erstellen eines Läufermagnetfelddatensatzes in einem Läufermagnetfelddatensatzerstellungsschritt, wobei der Läufermagnetfelddatensatz die im Läufermagnetfeldvermessungsschritt aufgenommenen Messwerte des Läufermagnetfelds umfasst.

Hierdurch wird der technische Vorteil erreicht, dass die im Läufermagnetfeldvermessungsschritt aufgenommenen Messwerten des Läufermagnetfelds für ein erneutes Durchführen des erfindungsgemäßen Verfahrens wiederverwendet werden können. Damit kann das Verfahren bei erneuter Durchführung vereinfacht und beschleunigt werden. Die Messwerte des Läufermagnetfelds können im Zuordnungsgenerierungsschritt entsprechend verwendet werden.

Der Läufermagnetfeldvermessungsschritt kann somit werkseitig durchgeführt werden, sodass ein Nutzer des Planarantriebssystems auf Basis des erstellten Läufermagnetfelddatensatzes, den der Nutzer beispielsweise von einem Server herunterladen kann, das erfindungsgemäße Verfahren und insbesondere den Zuordnungsgenerierungsschritt mit den entsprechenden Messwerten des Läufermagnetfelds durchführen kann.

Der Läufermagnetfelddatensatzes kann in der Steuereinheit und/oder in einem am Läufer angeordneten Prozessoreinheit/Speichereinheit gespeichert sein.

Nach einer Ausführungsform umfasst das Verfahren ferner: Identifizieren des Läufers anhand des individuellen Läufermagnetfelds des Läufers in einem Läufermagnetidentifizierungsschritt, wobei die Läuferidentifizierungsschritt umfasst:
Vergleichen der im Läufermagnetfeldbestimmungsschritt gemessenen Mehrzahl von Messwerten des Läufermagnetfelds mit der im Läufermagnetfeldvermessungsschritt aufgenommenen Mehrzahl von Messwerten des Läufermagnetfelds in einem zweiten Vergleichsschritt.

Hierdurch wird der technische Vorteil erreicht, dass eine eindeutige Identifikation jedes Läufers des Planarantriebssystems ermöglicht ist.

Nach einem zweiten Aspekt der Erfindung wird ein Planarantriebssystem mit wenigstens einer Steuereinheit, einem Statormodul, einem Läufer und einer Magnetfeldmessanordnung bereitgestellt, wobei die Steuereinheit über wenigstens eine Datenverbindung mit dem Statormodul verbunden ist, wobei das Statormodul eine Mehrzahl von elektrisch bestrombaren Statorleitern zum Erzeugen von Statormagnetfeldern zum elektrischen Steuern des Läufers umfasst, wobei der Läufer eine Magnetanordnung zum Generieren eines Läufermagnetfelds aufweist, wobei über das Statormagnetfeld und das Läufermagnetfeld eine magnetische Kopplung zwischen dem Läufer und dem Statormodul erzielbar ist, wobei das Statormodul zum Bestimmen einer Position des Läufers ein Sensormodul mit einer Mehrzahl von Magnetfeldsensoren umfasst, wobei die Magnetfeldsensoren in einer zweidimensionalen Anordnung am Statormodul angeordnet sind, wobei jeder Magnetfeldsensor eingerichtet ist, für einen Raumbereich in der zweidimensionalen Anordnung das Läufermagnetfeld zu bestimmen, und wobei die Steuereinheit eingerichtet ist, ein erfindungsgemäßes Verfahren zum Steuern eines Planarantriebssystems auszuführen.

Hierdurch kann ein Planarantriebssystem bereitgestellt werden, das über eine präzise und verbesserte Steuerung verfügt und eingerichtet ist, das erfindungsgemäße Verfahren mit den genannten Vorteilen auszuführen.

Die Erfindung wird anhand der beigefügten Figuren näher erläutert. Hierbei zeigen:
- Fig. 1: eine schematische Darstellung eines Planarantriebssystems mit einem Statormodul und einem Läufer gemäß einer Ausführungsform;
- Fig. 2: eine schematische perspektivische Ansicht eines Sensormoduls des Statormoduls gemäß einer Ausführungsform;
- Fig. 3: eine schematische Darstellung einer Unterseite eines Läufers gemäß einer weiteren Ausführungsform;
- Fig. 4: ein Flussdiagramm eines Verfahrens zum Steuern eines Planarantriebssystems gemäß einer Ausführungsform;
- Fig. 5: ein weiteres Flussdiagramm eines Verfahrens zum Steuern eines Planarantriebssystems gemäß einer Ausführungsform;
- Fig. 6: eine schematische Darstellung eines Läufers und einer Magnetfeldmessanordnung gemäß einer Ausführungsform;
- Fig. 7: ein weiteres Flussdiagramm eines Verfahrens zum Steuern eines Planarantriebssystems gemäß einer Ausführungsform; und
- Fig. 8: ein weiteres Flussdiagramm eines Verfahrens zum Steuern eines Planarantriebssystems gemäß einer Ausführungsform; und
- Fig. 9: ein weiteres Flussdiagramm eines Verfahrens zum Steuern eines Planarantriebssystems gemäß einer Ausführungsform.

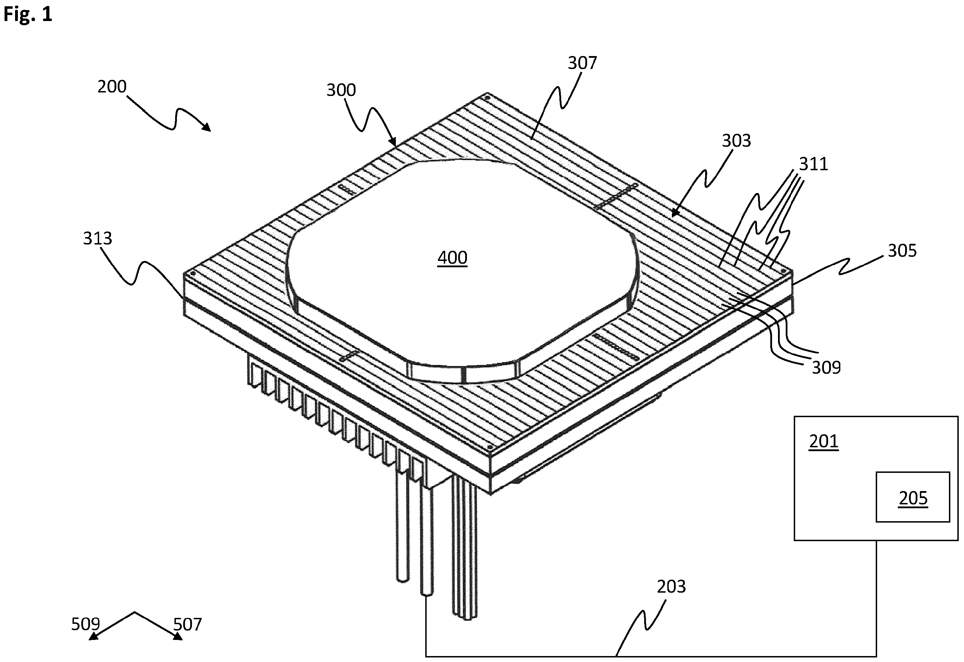

Fig. 1 zeigt eine schematische Ansicht eines Planarantriebssystems 200 mit einem Statormodul 300 und einem Läufer 400.

Gemäß der Ausführungsform in Fig.1 umfasst das Planarantriebssystem eine Steuereinheit 201, ein Statormodul 300 und einen Läufer 400. Die Steuereinheit 201 ist über eine Datenverbindung 203 mit dem Statormodul 300 verbunden. Die Steuereinheit 201 umfasst eine Positionszuordnungsfunktion 205 und ist eingerichtet, ein erfindungsgemäßes Verfahren zum Steuern eines Planarantriebssystems 200 auszuführen.

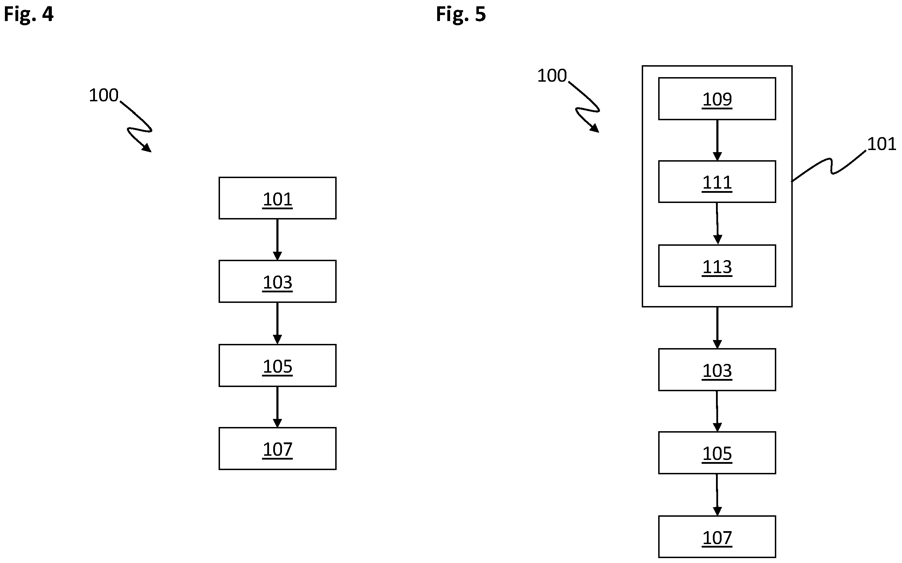

Für eine detaillierte Beschreibung des erfindungsgemäßen Verfahrens zum Steuern eines Planarantriebssystems 200 und der Funktionsweise der Positionszuordnungsfunktion 205 wird auf die Beschreibung zu den Fig. 4, Fig. 5, Fig. 7 und Fig. 8 verwiesen.

Das Statormodul 300 hat eine ebene Statoroberfläche 303. Die ebene Statoroberfläche 303 ist an einer Oberseite eines Statormodulgehäuses 305 angeordnet. Oberhalb der Statoroberfläche 303 ist ein Läufer 400 angeordnet. Die Statoroberfläche 303 ist Teil einer Statoreinheit 307 für einen elektrischen Antrieb des Läufers 400. Die Statoreinheit 307 mit der Statoroberfläche 303 kann als Leiterplatte ausgeführt sein. Die Statoroberfläche 303 ist quadratisch ausgebildet.

Der Läufer 400 ist oberhalb der Statoroberfläche 303 zumindest in eine erste Richtung 507 und in eine zweite Richtung 509 antreibbar. Darüber hinaus ist der Läufer 400 auch in einer zu der ersten Richtung 507 und der zweiten Richtung 509 senkrecht angeordneten dritten Richtung antreibbar. Die Statoroberfläche 303 weist mehrere Statorleiter 309 auf, die in der Ausführungsform in Fig. 1 als Statorleiter 309 ausgebildet sind, und die im Wesentlichen entlang der ersten Richtung 507 ausgerichtet sind. Die Statorleiter 309 sind stromleitend ausgebildet und können so bestromt werden, dass der Läufer 400 angetrieben wird. Zwischen den Statorleitern 309 ist ein Statorleiterzwischenraum 311 vorgesehen, durch den die Statorleiter 309 voneinander elektrisch isoliert sind. Die Statoroberfläche 303 ist ebenfalls elektrisch isoliert gegenüber den Statorleitern 309. Unterhalb der Statoroberfläche 303 kann eine weitere Anordnung von Statorleitern vorgesehen sein, in der die Statorleiter im Wesentlichen entlang der zweiten Richtung 509 ausgerichtet sind.

In dem Statormodulgehäuse 305 sind Elektronikmodule (nicht dargestellt) für den Antrieb und für die Steuerung des Läufers 400 angeordnet. Die Elektronikmodule können beispielsweise Leistungsmodule zur Erzeugung der Antriebsströme und Steuermodule zur Steuerung der Leistungsmodule und der Antriebsströme umfassen. Auf einer der Statoroberfläche 303 gegenüberliegenden Unterseite des Statormodulgehäuses 305 sind nicht dargestellte Anschlüsse angeordnet zur Verbindung des Statormoduls 300 mit mehreren Anschlussleitungen. Die Anschlussleitungen können beispielsweise eine Steuerleitung zur Übertragung von Steuersignalen für die Steuermodule und eine Energieversorgungsleitung zur Versorgung der Leistungs- und/oder Steuermodule mit elektrischer Energie umfassen. Insbesondere kann dem Leistungsmodul über die Energieversorgungsleitung elektrische Energie zur Erzeugung der Antriebsströme zugeführt werden.

Das Statormodulgehäuse 305, die Statoreinheit 307 und die Statoroberfläche 303 sind in der Draufsicht auf die Statoroberfläche 303 rechteckig, insbesondere quadratisch, ausgebildet.

Das Statormodulgehäuse 305 weist eine Schnittebene 313 auf. Auf Höhe der Schnittebene 313 kann innerhalb des Statormodulgehäuses 305 ein Sensormodul angeordnet sein.

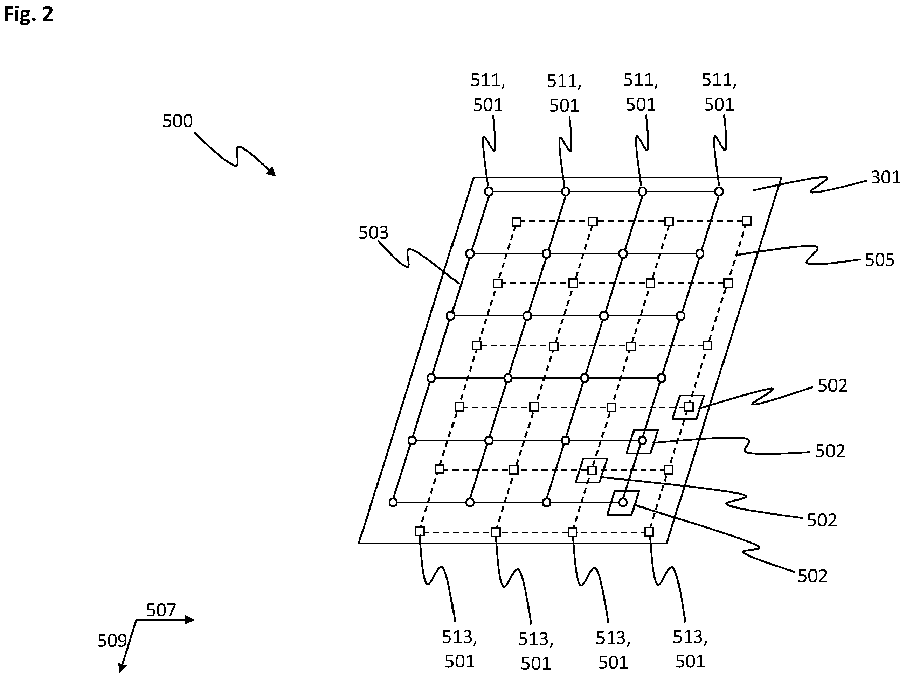

Fig. 2 zeigt eine perspektivische Ansicht eines Sensormoduls 500 zur Erfassung einer Position des Läufers 400 im Planarantriebssystem 200. Das Sensormodul 500 ist rechteckig und weist eine zweidimensionale Anordnung von Magnetfeldsensoren 501 auf einem Träger 301 des Statormoduls 300 auf. Die Magnetfeldsensoren 501 sind also auf dem Träger 301 angeordnet. Die zweidimensionale Anordnung der Magnetfeldsensoren 501 weist ein erstes periodisches Gitter 503 von Magnetfeldsensoren 501 und ein zweites periodisches Gitter 505 von Magnetfeldsensoren 501 auf. Die Magnetfeldsensoren 501 des ersten Gitters 503 sind durch runde Symbole angedeutet, während die Magnetfeldsensoren 501 des zweiten Gitters 505 durch viereckige Symbole angedeutet sind. Alternativ kann das Sensormodul 500 beziehungsweise die Anordnung der Magnetfeldsensoren 501 quadratisch, parallelogrammförmig oder beliebig vorteilhaft geformt sein.

Sofern im Sinne der Anmeldung auf die Magnetfeldsensoren 501 allgemein eingegangen wird, findet das Bezugszeichen 501 Verwendung.

Die ersten Magnetfeldsensoren 511 sind mit durchgezogenen Linien zur Verdeutlichung der Gitterstruktur des ersten Gitters 503 verbunden. Die zweiten Magnetfeldsensoren 513 sind mit gestrichelten Linien zur Verdeutlichung der Gitterstruktur des zweiten Gitters 505 verbunden. Die ersten Magnetfeldsensoren 511 und die zweiten Magnetfeldsensoren 513 können dabei identisch sein, die runden beziehungsweise eckigen Symbole sollen nur die Positionen der Magnetfeldsensoren 501 zugehörig zu den jeweiligen Teilanordnungen symbolisieren.

Das erste Gitter 503 und das zweite Gitter 505 sind identisch aufgebaut und zueinander verschoben. Dadurch sind die zweiten Magnetfeldsensoren 513 des zweiten Gitters 505 und die ersten Magnetfeldsensoren 511 des ersten Gitters 503 jeweils zueinander verschoben.

Die in Fig. 2 dargestellte Anordnung der Magnetfeldsensoren 501 dient ausschließlich zur Illustration und kann von der in Fig. 2 dargestellten Anordnung abweichen.

Die Magnetfeldsensoren 501 sind jeweils eingerichtet, Magnetfelder für einen Raumbereich 502 zu bestimmen. Messungen eines Magnetfeldsensors 501 sind somit auf den jeweiligen Raumbereich 502 des jeweiligen Magnetfeldsensors 501 beschränkt. In der Ausführungsform in Fig. 2 sind die Raumbereiche 502 als rechteckige beziehungsweise quadratische Flächen dargestellt. Dies ist lediglich darstellerischen Gründen geschuldet. Die Raumbereiche 502 der Magnetfeldsensoren 501 können auch geometrisch anders gestaltete räumliche Ausdehnungen aufweisen und beispielsweise kreisförmig ausgestaltet sein. Insbesondere können die Raumbereiche 502 punktförmig ausgestaltet sein, sodass durch die Magnetfeldsensoren 501 Punktmessungen der jeweiligen Magnetfelder durchgeführt werden können, bei denen einzelne Magnetfeldsensoren 501 ausschließlich Feldbeiträge der jeweiligen Magnetfelder messen, die unmittelbar an den Positionen der jeweiligen Magnetfeldsensoren 501 angeordnet sind.

Der Träger 301 ist eben, so dass die Magnetfeldsensoren 501 in einer Ebene, also in einer zweidimensionalen Anordnung, angeordnet sind.

Die Magnetfeldsensoren 501 können als Hall-Sensoren ausgebildet sein. Insbesondere können die Magnetfeldsensoren 501 als 2D- oder 3D-Hall-Sensoren ausgebildet sein, wobei 3D-Hall-Sensoren die Magnetfeldkomponenten in drei linear unabhängigen Raumrichtungen messen. Diese Raumrichtungen können insbesondere die erste Richtung 507 und die zweite Richtung 509 sowie eine dritte Richtung senkrecht zur ersten Richtung 507 und zur zweiten Richtung 509 umfassen.

Der Träger 301 kann als eine Leiterplatte und/oder eine Platine ausgebildet sein. Dadurch kann der Träger 301 auf einfachem Weg bereitgestellt werden.

Die Anordnung von Magnetfeldsensoren 501 kann genau zwei Teilanordnungen der zwei Gitter 503, 505 umfassen.

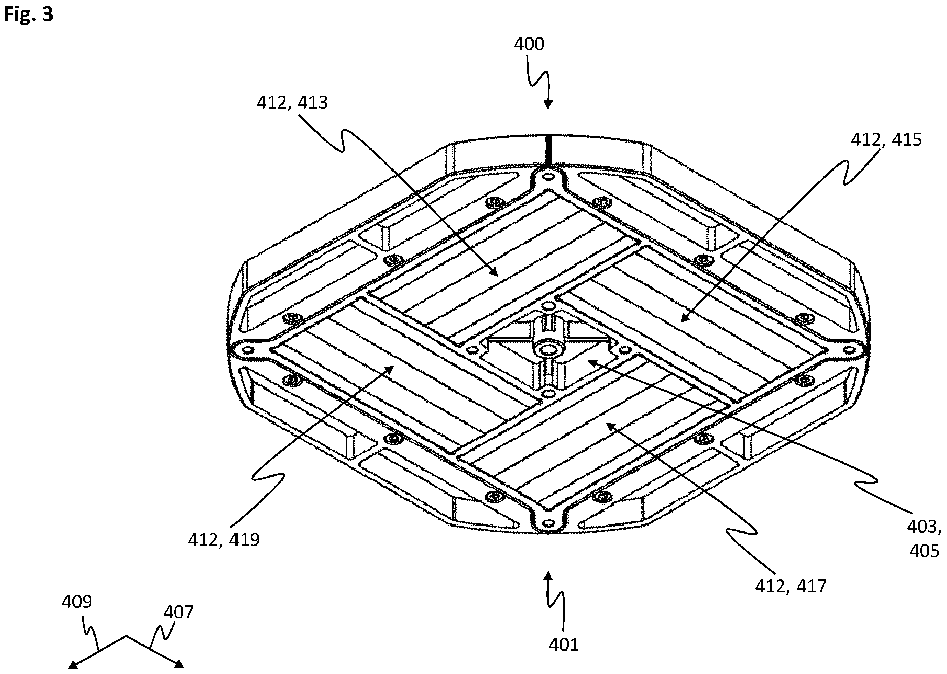

Fig. 3 zeigt den Läufer 400 des Planarantriebssystems 200 in einer Ansicht von unten auf eine Unterseite des Läufers 400. Im Betrieb des Planarantriebssystems 200 ist die Unterseite des Läufers 400 der Statoroberfläche 303 des Statormoduls 300 zugewandt angeordnet. Der Läufer 400 weist an der Unterseite eine Magnetanordnung 401 auf. Die Magnetanordnung 401 ist rechteckig, insbesondere quadratisch, ausgebildet und umfasst mehrere Magneten. Die Unterseite des Läufers 400 ist, insbesondere im Bereich der Magneten der Magnetanordnung 401, eben bzw. planar ausgebildet. Im Betrieb ist die Unterseite des Läufers 400 mit der Magnetanordnung 401 im Wesentlichen parallel zu der Statoroberfläche 303 orientiert und der Statoroberfläche 303 zugewandt angeordnet.

Die Magnetanordnung 401 umfasst eine erste Magneteinheit 413, eine zweite Magneteinheit 415, eine dritte Magneteinheit 417 und eine vierte Magneteinheit 419, die im allgemeinen als Magneteinheit 412 bezeichnet werden. Die erste Magneteinheit 413 und die dritte Magneteinheit 417 weisen jeweils in einer ersten Läuferrichtung 407 nebeneinander angeordnete und entlang einer zu der ersten Läuferrichtung 407 senkrecht orientierten zweiten Läuferrichtung 409 ausgedehnte längliche Antriebsmagnete auf. Die zweite Magneteinheit 415 und die vierte Magneteinheit 419 weisen jeweils in der zweiten Läuferrichtung 409 nebeneinander angeordnete und entlang der ersten Läuferrichtung 407 ausgedehnte längliche Antriebsmagnete auf. Die erste und dritte Magneteinheit 413, 417 dient im Betrieb einem Antrieb des Läufers 400 in der ersten Läuferrichtung 407, und die zweite und vierte Magneteinheit 415, 419 dient im Betrieb einem Antrieb des Läufers 400 in der zweiten Läuferrichtung 409. Darüber hinaus dienen die erste Magneteinheit 413, die zweite Magneteinheit 415, die dritte Magneteinheit 417 und die vierte Magneteinheit 419 einem Antrieb des Läufers 400 in einer zur ersten Läuferrichtung 407 und der zweiten Läuferrichtung 409 senkrecht angeordneten dritten Läuferrichtung.

In der Mitte der Magnetanordnung 401 weist der Läufer 400 eine Freifläche 403 auf, die nicht von Magneten der Magnetanordnung 401 bedeckt wird. Im Bereich der Freifläche 403 weist der Läufer 400 eine Befestigungsstruktur 405 auf. In der Freifläche 403 können auch weitere Komponenten, wie beispielsweise eine Leiterkarte angeordnet sein.

Fig. 4 zeigt ein Flussdiagramm eines Verfahrens 100 zum Steuern eines Planarantriebssystems 200 gemäß einer Ausführungsform.

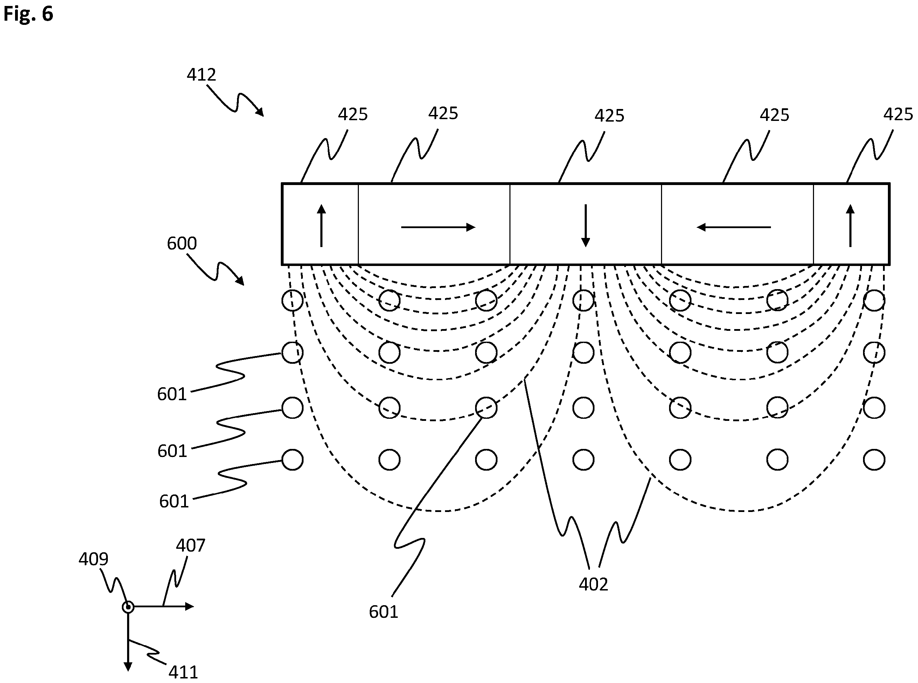

Das Verfahren 100 zum Steuern eines Planarantriebssystems 200 ist auf ein Planarantriebssystem 200 gemäß den Ausführungsformen in Fig. 1 bis Fig. 3 anwendbar. Das Verfahren 100 in Fig. 4 wird unter Berücksichtigung der Fig. 6 beschrieben.

Gemäß der Ausführungsform in Fig. 4 umfasst ein Planarantriebssystem 200 wenigstens eine Steuereinheit 201, ein Statormodul 300 und einen Läufer 400, wobei das Statormodul 300 eingerichtet ist, zum elektrischen Steuern des Läufers 400 Statormagnetfelder zu generieren, wobei der Läufer 400 eine Magnetanordnung 401 zum Generieren eines Läufermagnetfelds 402 aufweist, wobei über die Statormagnetfelder und das Läufermagnetfeld 402 eine magnetische Kopplung zwischen dem Läufer 400 und dem Statormodul 300 erzielbar ist, wobei das Statormodul 300 zum Bestimmen einer Position des Läufers 400 ein Sensormodul 500 mit einer Mehrzahl von Magnetfeldsensoren 501 umfasst, wobei die Magnetfeldsensoren 501 in einer zweidimensionalen Anordnung am oder im Statormodul 300 angeordnet sind, und wobei jeder Magnetfeldsensor 501 eingerichtet ist, für einen Raumbereich in der zweidimensionalen Anordnung das Läufermagnetfeld 402 zu bestimmen.

Gemäß der Ausführungsform in Fig. 4 umfasst das Verfahren 100 die Verfahrensschritte:
Generieren einer Positionszuordnungsfunktion 205 in einem Zuordnungsgenerierungsschritt 101, wobei die Positionszuordnungsfunktion 205 eingerichtet ist, einer Mehrzahl von Messwerten des Läufermagnetfelds 402 einer Mehrzahl von Magnetfeldsensoren 501 des Sensormoduls 500 eine Position des Läufers 400 relativ zum Statormodul 300 zuzuordnen;
Messen einer Mehrzahl von Messwerten des Läufermagnetfelds 402 durch Magnetfeldsensoren 501 des Sensormoduls 500 für eine zu bestimmende Position des Läufers 400 relativ zum Statormodul 300 in einem Läufermagnetfeldbestimmungsschritt 103;
Anwenden der Positionszuordnungsfunktion 205 auf die im Läufermagnetfeldbestimmungsschritt 103 bestimmte Mehrzahl von Messwerten des Läufermagnetfelds 402 der Mehrzahl von Magnetfeldsensoren 501 in einem Messwertanalyseschritt 105; und Bestimmen der Position des Läufers 400 relativ zum Statormodul 300 durch die Positionszuordnungsfunktion 205 in einem Positionsbestimmungsschritt 107.

In einem Zuordnungsgenerierungsschritt 101 wird eine Positionszuordnungsfunktion 205 generiert. Die Positionszuordnungsfunktion 205 ist eingerichtet, einer Mehrzahl von Messwerten des Läufermagnetfelds 402, die von einer Mehrzahl von Magnetfeldsensoren 501 des Sensormoduls 500 aufgenommen wurden, auf Basis der Anordnung der Magnetfeldsensoren 501 innerhalb des Sensormoduls 500 und somit innerhalb des Statormoduls 300 eine Position des entsprechenden Läufers 400 relativ zum Statormodul 300 zuzuordnen.

Die Positionszuordnungsfunktion 205 kann hierzu eine Mehrzahl von Zuordnungen zwischen Positionen des Läufers 400 relativ zum Statormodul 300 und Messwerten des Läufermagnetfelds 402 von einer Mehrzahl von Magnetfeldsensoren 501 des Sensormoduls 500 umfassen. Die Zuordnungen der Positionszuordnungsfunktion 205 sind jeweils als eine eindeutige Relation zwischen Positionen des Läufers 400 und Messwerten des Läufermagnetfelds 402 einer ausgewählten Mehrzahl von Magnetfeldsensoren 501 ausgestaltet.

Das Generieren der Positionszuordnungsfunktion 205 kann insbesondere vor Betrieb des Planarantriebssystems 200 durchgeführt werden. Beispielsweise kann diese in einem Initialisierungsprozess des Planarantriebssystems 200 durchgeführt werden. Alternativ kann das Generieren der Positionszuordnungsfunktion 205 werkseitig durchgeführt werden.

Nach Generieren der Positionszuordnungsfunktion 205 wird zum Bestimmen einer Position des Läufers 400 relativ zum Statormodul 300 in einem Läufermagnetfeldbestimmungsschritt 103 eine Mehrzahl von Messwerten des Läufermagnetfelds 402 durch eine Mehrzahl von Magnetfeldsensoren 501 bestimmt. Zu jeder Positionsbestimmung des Läufers 400 werden durch geeignete Magnetfeldsensoren 501 des Sensormoduls 500 Messungen des Läufermagnetfelds 402 durchgeführt und somit eine Mehrzahl von Messwerten des Läufermagnetfelds 402 für eine Mehrzahl verschiedener Raumbereiche 502 bestimmt.

Darauffolgend wird die Positionszuordnungsfunktion 205 auf die Mehrzahl von Messwerten des Läufermagnetfelds 402, die im Läufermagnetfeldbestimmungsschritt 103 durch die Mehrzahl von Magnetfeldsensoren 501 für die Mehrzahl von Raumbereichen 502 gemessen wurden, in einem Messwertanalyseschritt 105 angewendet.

Durch die Mehrzahl von Magnetfeldsensoren 501 wird im Läufermagnetfeldbestimmungsschritt 103 ein Sensorbild des Läufermagnetfelds 402 aufgenommen, wobei das Sensorbild aus der Mehrzahl der Messwerte des Läufermagnetfelds 402 für die jeweiligen Raumbereiche 502 der einzelnen Magnetfeldsensoren 501 besteht. Jede Zuordnung der Positionszuordnungsfunktion 205 entspricht jeweils einem Sensorbild, das ebenfalls aus einer Mehrzahl von Werten des Läufermagnetfelds 402 für eine Mehrzahl von Raumbereichen 502 einer Mehrzahl von Magnetfeldsensoren 501 besteht, wobei das Sensorbild der Zuordnung mit einer eindeutig bestimmten Position des Läufers 400 relativ zum Statormodul 300 assoziiert ist. Zu der assoziierten Position tragen hierbei die jeweiligen Magnetfeldsensoren 501 bei, durch die das jeweilige Sensorbild gegeben ist. Durch die Anwendung der Positionszuordnungsfunktion 205, in der die Zuordnungen zwischen Positionen des Läufers 400 relativ zum Statormodul 300 und Messwerten des Läufermagnetfelds 402 integriert sind, auf die Mehrzahl von Messwerten des Läufermagnetfelds 402, die im Läufermagnetfeldbestimmungsschritt 103 aufgenommen wurde, wird im Messwertanalyseschritt 105 das im Läufermagnetfeldbestimmungsschritt 103 durch die Mehrzahl von Messwerten der Mehrzahl von Magnetfeldsensoren 501 bestimmte Sensorbild mit Bezug auf die Sensorbilder der in die Positionszuordnungsfunktion integrierten Zuordnungen analysiert.

Hierbei wird durch die Positionszuordnungsfunktion 205 im Positionsbestimmungsschritt 107 auf Basis der Zuordnungen der Positionszuordnungsfunktion 205 für das Sensorbild dem gemessenen Sensorbild eine Position des Läufers 400 relativ zum Statormodul 300 zugeordnet und damit eine reale Position des Läufers 400 ermittelt.

Fig. 5 zeigt ein weiteres Flussdiagramm des Verfahrens 100 zum Steuern eines Planarantriebssystems 200 gemäß einer Ausführungsform.

Fig. 5 wird unter Berücksichtigung von Fig. 6 beschrieben.

Die Ausführungsform in Fig. 5 basiert auf der Ausführungsform in Fig. 4 und umfasst alle Verfahrensschritte der Ausführungsform in Fig. 4. Zur Vermeidung unnötiger Wiederholungen werden die Verfahrensschritte der Ausführungsform in Fig. 4 im Folgenden nicht erneut detailliert beschrieben.

Abweichend von der Ausführungsform in Fig. 4 umfasst in der Ausführungsform in Fig. 5 der Zuordnungsgenerierungsschritt 101 einen Läufermagnetfeldvermessungsschritt 109. Im Läufermagnetfeldvermessungsschritt 109 wird eine dreidimensionale Vermessung des Läufermagnetfelds 402 des jeweiligen Läufers 400 bestimmt. Zur Bestimmung der dreidimensionalen Vermessung des Läufermagnetfelds 402 kann eine dreidimensionale Anordnung diskreter Messpunkte des Läufermagnetfelds 402 genutzt werden. Hierzu kann mit einer Magnetfeldmessanordnung 600, die in drei Raumdimensionen relativ zum Läufer 400 verfahrbar ist und Magnetfeldsensoreinheiten 601 umfasst, für das zu bestimmende Läufermagnetfeld 402 in allen drei Raumrichtungen eine Mehrzahl von Messwerten aufgenommen werden. Hierzu kann die Magnetfeldmessanordnung 600 relativ zum Läufer 400 in alle drei Raumrichtungen verfahren werden. Alternativ kann der Läufer 400 relativ zur Magnetfeldmessanordnung 600 in allen drei Raumrichtungen verfahren werden.

Durch die Mehrzahl von Messwerten des Läufermagnetfelds 402 durch die Mehrzahl von Magnetfeldsensoreinheiten 601 kann das Läufermagnetfeld 402 in allen drei Raumdimensionen abgerastert werden und somit eine dreidimensionale Vermessung des Läufermagnetfelds 402 erreicht werden.

Die Magnetfeldsensoreinheiten 601 können als Hall-Sensoren, insbesondere als zweidimensionale oder dreidimensionale Hallsensoren, ausgebildet sein.

Die Magnetfeldmessanordnung 600 kann eine Magnetfeldsensoreinheit 601 umfassen. Zum Erstellen einer dreidimensionalen Anordnung diskreter Messpunkte kann diese eine Magnetfeldsensoreinheit 601 in allen drei Raumrichtungen relativ zum Läufer 400 verfahren werden, und an verschiedenen Raumpunkten können Messwerte des Läufermagnetfelds 402 aufgenommen werden. Alternativ kann die Magnetfeldmessanordnung 600 eine eindimensionale Anordnung von mindestens zwei Magnetfeldsensoreinheiten 601 umfassen. Alternativ kann die Magnetfeldmessanordnung 600 eine zweidimensionale Anordnung von Magnetfeldsensoreinheiten 601 umfassen. Diese können in allen drei Raumrichtungen oder beispielsweise nur in zwei Raumrichtungen oder nur in einer Raumrichtung relativ zum Läufer 400 verfahren werden, um die gewünschte dreidimensionale Anordnung diskreter Messpunkte und somit die dreidimensionale Vermessung des Läufermagnetfelds 402 zu erreichen. Alternativ kann die Magnetfeldmessanordnung 600 eine dreidimensionale Anordnung von Magnetfeldsensoreinheiten 601 umfassen, die wiederum in allen drei Raumrichtungen relativ zum Läufer 400 verfahrbar ist. Somit kann eine beliebige dreidimensionale Anordnung diskreter Messpunkte des Läufermagnetfelds 402 erreicht werden, bei der zu beliebigen Raumpunkten Messwerte des Läufermagnetfelds 402 aufgenommen werden.

Darüber hinaus kann die dreidimensionale Vermessung des Läufermagnetfelds 402 durch eine Modellbeschreibung der dreidimensionalen Anordnung diskreter Messpunkte dargestellt sein. Die Modellbeschreibung kann hierbei Interpolationen der dreidimensionalen Anordnung diskreter Messpunkte umfassen. Hierdurch können für Raumpunkte, für die in dem Läufermagnetfeldvermessungsschritt 109 keine Messwerte des Läufermagnetfelds 402 aufgenommen wurden, auf Basis der Interpolation Werte des Läufermagnetfelds 402 generiert werden. Hierdurch kann eine lückenlose dreidimensionale Vermessung des Läufermagnetfelds 402 erreicht werden, in der für beliebige Raumpunkte Werte des Läufermagnetfelds 402 bereitgestellt sind.

Darauffolgend wird auf Basis der dreidimensionalen Vermessung des Läufermagnetfelds 402 in einem Sensorwertbestimmungsschritt 111 eine Mehrzahl von Werten des Läufermagnetfelds 402 für eine Mehrzahl von Magnetfeldsensoren 501 des Sensormoduls 500 des Statormoduls 300 für eine Mehrzahl von Positionen des Läufers 400 relativ zum Statormodul 300 bestimmt. Durch umfassende Kenntnis der dreidimensionalen Ausgestaltung des Läufermagnetfelds 402 und aufgrund der Kenntnis der Positionierung der einzelnen Magnetfeldsensoren 501 im Statormodul 300 können für eine beliebige Position des Läufers 400 relativ zum Statormodul 300 für die Raumbereiche 502 der einzelnen Magnetfeldsensoren 501 Werte des Läufermagnetfelds 402 bestimmt werden. Durch Kenntnis der dreidimensionalen Ausgestaltung des Läufermagnetfelds 402 kann somit für eine beliebige Position des Läufers 400 relativ zum Statormodul 300 für die Magnetfeldsensoren 501 ein Messwert des Läufermagnetfelds 402 vorhergesagt werden.

In der Ausführungsform in Fig. 5 ist die Positionszuordnungsfunktion 205 als ein Neuronales Netz ausgebildet. In einem Trainingsschritt 113 wird das Neuronale Netz auf die im Sensorwertbestimmungsschritt 111 für die Mehrzahl von Positionen des Läufers 400 relativ zum Statormodul 300 bestimmten Werte des Läufermagnetfelds 402 für die Mehrzahl von Magnetfeldsensoren 501 des Sensormoduls (500) trainiert.

Hierzu werden die im Sensorwertbestimmungsschritt 111 bestimmten Messwerte des Läufermagnetfelds 402 als Trainingsdaten in das neuronale Netz eingegeben und dieses auf die entsprechenden Positionen des Läufers 400 relativ zum Statormodul 300 trainiert, bis das Neuronal Netz eingerichtet ist, neuen Messwerten des Läufermagnetfelds 402, die nicht zum Training des Neuronalen Netzes sondern zur Positionsbestimmung des Läufers 400 aufgenommen wurden, eine entsprechende Position des Läufers 400 zuzuordnen. Durch den Trainingsprozess im Trainingsschritt 113 werden vom Neuronalen Netz somit eine Mehrzahl von Zuordnungen zwischen Messwerten des Läufermagnetfelds 402 und damit verbundenen Positionen des Läufers 400 relativ zum Statormodul 300 erlernt, sodass das Neuronale Netz auf Basis dieser erlernten Zuordnungen für neue Messwerte des Läufermagnetfelds 402 entsprechende Positionen des Läufers 400 relativ zum Statormodul 300 bestimmen kann.

Die im Sensorwertbestimmungsschritt 111 bestimmten Messwerte des Läufermagnetfelds 402 umfassen hierbei Messwerte einer Mehrzahl von Magnetfeldsensoren 501, die einen zusammenhängenden Bereich des Statormoduls 300 abdecken und somit geeignet sind, eine flächenmäßige Bild des Läufermagnetfels 402 zu erstellen. Unter Berücksichtigung der an der Messung der Messwerte des Läufermagnetfelds 402 beteiligten Magnetfeldsensoren 501 und deren Positionierung am Statormodul 300 ermöglicht eine Zuordnung einer entsprechenden Position des Läufers 400 relativ zum Statormodul 300, indem eine Position des Läufers 400 durch die Positionierung der Magnetfeldsensoren 501 bestimmt wird, die das Läufermagnetfeld 401 messen.

Durch die dreidimensionale Vermessung des Läufermagnetfelds 402 wird eine umfassende Kenntnis der dreidimensionalen Ausgestaltung des Läufermagnetfelds 402 erreicht. Durch die umfassende Kenntnis der dreidimensionalen Ausgestaltung des Läufermagnetfelds 402 kann für eine beliebige Position des Läufers 400 relativ zum Statormodul 300 jedem Magnetfeldsensor 501 einer Mehrzahl von Magnetfeldsensoren 501 des Sensormoduls 500 ein eindeutig bestimmter Wert des Läufermagnetfelds 402 zugeordnet werden. Hierdurch kann durch die umfassende Kenntnis des Läufermagnetfelds 401 exakt bestimmt werden welche der Magnetfeldsensoren 501 welchen Teil des Läufermagnetfelds 401 messen. Somit kann durch das Neuronale Netz eine exakte Positionsbestimmung des Läufers 400 relativ zum Statormodul 300 durchgeführt werden.

Durch die exakte Vermessung des Läufermagnetfelds 402 kann durch die Messung des Läufermagnetfelds 402 durch die Mehrzahl verschiedener Magnetfeldsensoren 501 neben einer Position des Läufers 400 relativ zum Statormodul 300, die in erster Linie eine translatorische Positionierung des Läufers 400 relativ zum Statormodul 300 umfasst, eine Orientierung des Läufers 400 relativ zum Statormodul 300 ermittelt werden. Eine Orientierung des Läufers 400 umfasst hierbei eine Drehung des Läufers 400 um eine zur Statoroberfläche 303 senkrecht orientierte Rotationsachse. Mit der Positionsbestimmung des Läufers 400 relativ zum Statormodul 300 kann somit eine translatorische Positionierung und eine rotationsmäßige Orientierung des Läufers 400 relativ zu Statormodul 300 ermittelt werden.

Indem im Läufermagnetfeldvermessungsschritt 109 eine dreidimensionale Vermessung des Läufermagnetfelds 401 durchgeführt wird, die ein dreidimensionales Raster des Läufermagnetfelds 401 ergibt, in dem, entsprechend der Rasterdichte, einem beliebigen Raumpunkt einen individuellen Wert des Läufermagnetfelds 401 zuordnet, kann durch Messwert des Läufermagnetfelds 402, der durch einen Magnetfeldsensor 501 des Sensormoduls 500 aufgenommen wurde, dieser Messwert des Läufermagnetfelds 402 in der dreidimensionalen Vermessung des Läufermagnetfelds 402 verortet und somit dieser Magnetfeldsensor 501 relativ zum Läufer 400 positioniert werden. Durch ein entsprechendes Vorgehen für mehrere Messwerte des Läufermagnetfelds 402 mehrerer verschiedener Magnetfeldsensoren 501 kann eine relative Positionierung der jeweiligen Magnetfeldsensoren 501 zum Läufer 400 und damit, unter Berücksichtigung der Positionierung der einzelnen Magnetfeldsensoren 501 am Statormodul 300, eine Position des Läufers 400 relativ zum Statormodul 300 bestimmt werden.

Über den Trainingsprozess im Trainingsschritt 113 ist das Neuronale Netz in der Lage, diese relativen Positionierungen der einzelnen Magnetfeldsensoren 501 relativ zum Läufer 400 durchzuführen und damit verbunden eine Position des Läufers 400 relativ zum Statormodul 300 zu bestimmen.

Fig. 6 zeigt eine schematische Darstellung eines Läufers 400 und einer Magnetfeldmessanordnung 600 gemäß einer Ausführungsform.

In Fig. 6 sind ein Läufer 400, insbesondere eine Magneteinheit 412 der Magnetanordnung 401 des Läufers 400, und eine Magnetfeldmessanordnung 600 dargestellt. Die Magneteinheit 412 des Läufers 400 umfasst eine Mehrzahl von Magneten 425. Die einzelnen Magneten 425 weisen eine individuelle Magnetisierung auf, deren Magnetisierungsrichtung durch die unterschiedlich ausgerichteten Pfeile dargestellt sind. Die einzelnen Magneten 425 der Magneteinheit 412 sind in einer Halbach-Anordnung angeordnet.

Ferner ist ein Läufermagnetfeld 402 des dargestellten Läufers 400 teilweise dargestellt. In Fig. 6 ist ausschließlich der Teil des Läufermagnetfelds 402 gezeigt, der sich von der Unterseite des Läufers 400 aus erstreckt.

Die Magnetfeldmessanordnung 600 ist als eine dreidimensionale Anordnung von Magnetfeldsensoreinheiten 601 ausgebildet. Aus darstellerischen Gründen ist in Fig. 6 lediglich eine zweidimensionale Darstellung gezeigt. Die Magnetfeldmessanordnung 600 ist entlang der ersten Läuferrichtung 407, der zweiten Läuferrichtung 409 und der dritten Läuferrichtung 411 relativ zum Läufer 400 verfahrbar. Alternativ ist der Läufer 400 relativ zur Magnetfeldanordnung 600 verfahrbar.

Durch die Mehrzahl von Magnetfeldsensoreinheiten 601 kann eine dreidimensionale Anordnung diskreter Messpunkte des Magnetfelds 402 aufgenommen werden.

Die Darstellung des Läufers 400, insbesondere der Magneteinheit 412, und der Magnetfeldmessanordnung 600 ist ausschließlich beispielhaft. Insbesondere sind die Größenverhältnisse nicht korrekt wiedergegeben. Abweichend zu der in Fig. 6 dargestellten Ausführungsform des Läufers 400, der Magneteinheit 412 und der Magnetfeldmessanordnung 600 können sowohl der Läufer 400, die Magneteinheit 412 als auch die Magnetfeldmessanordnung 600 abweichend ausgestaltet sein.

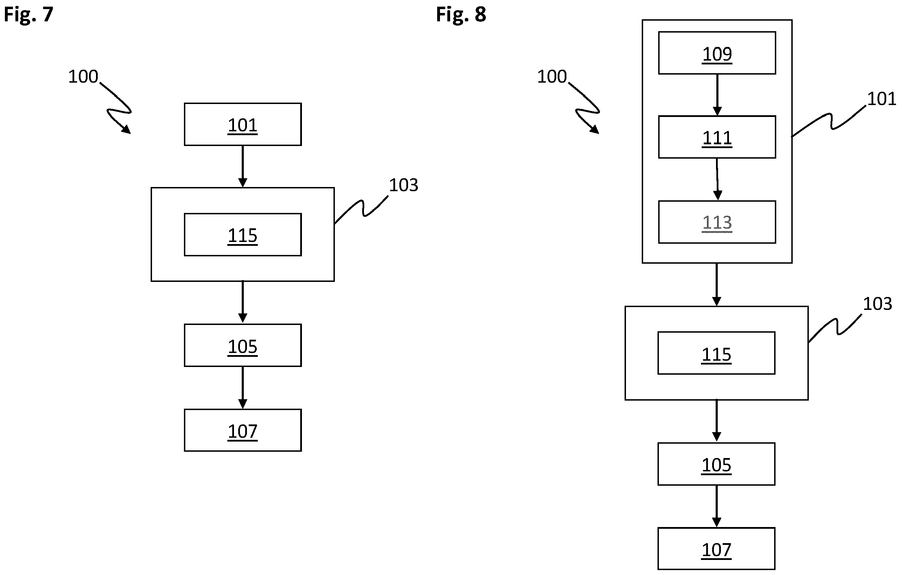

Fig. 7 zeigt ein weiteres Flussdiagramm des Verfahrens 100 zum Steuern eines Planarantriebssystems 200 gemäß einer weiteren Ausführungsform.

Die Ausführungsform in Fig. 7 basiert auf der Ausführungsform in Fig. 4 und umfasst alle Verfahrensschritte der Ausführungsform in Fig. 4. Zur Vermeidung unnötiger Wiederholungen werden die Verfahrensschritte der Ausführungsform in Fig. 4 im Sinne der Anmeldung nicht detailliert beschrieben.

Abweichend zu der Ausführungsform in Fig. 4 umfasst in der Ausführungsform in Fig. 7 der Läufermagnetfeldbestimmungsschritt 103 einen Magnetfeldsensorauswahlschritt 115. Im Magnetfeldsensorauswahlschritt 115 wird für eine Positionsbestimmung des Läufers 400 relativ zum Statormodul 300 eine Mehrzahl von Magnetfeldsensoren 501 des Sensormoduls 500 ausgewählt. Die Auswahl beschränkt sich hierbei vorzugsweise auf die Magnetfeldsensoren 501, die einen relevanten Beitrag zur Bestimmung des Läufermagnetfelds 402 des Läufers 400 in der jeweiligen Position relativ zum Statormodul 300 beitragen können. Vorzugsweise werden die Magnetfeldsensoren 501 des Sensormoduls 500 ausgewählt, die unmittelbar unterhalb des Läufers 400 angeordnet sind. Aufgrund der Ausgestaltung des Läufermagnetfelds 402, das einen primären Anteil senkrecht zur Unterseite des Läufers 400 aufweist, tragen Magnetfeldsensoren 501, die nicht unmittelbar unterhalb des positionierten Läufers 400 angeordnet sind, keinen relevanten Beitrag zur Bestimmung des Läufermagnetfelds 402 bei.

Fig. 8 zeigt ein weiteres Flussdiagramm des Verfahrens 100 zum Steuern eines Planarantriebssystems 200 gemäß einer weiteren Ausführungsform.

Die Ausführungsform in Fig. 8 entspricht einer Kombination der Ausführungsformen in Fig. 5 und Fig. 7.

Das erfindungsgemäße Verfahren 100 ist auf eine Mehrzahl von Läufern 400 anwendbar. Insbesondere kann für jeden Läufer 400 der Mehrzahl von Läufern 400 eine individuelle Positionszuordnungsfunktion 205 generiert werden. Insbesondere für die Ausführungsform der Positionszuordnungsfunktion 205 als ein neuronales Netz kann für jeden Läufer 400 ein individuelles neuronales Netz generiert werden. Alternativ kann für jeden Läufer 400 der Mehrzahl von Läufern 400 eine gemeinsame Positionszuordnungsfunktion 205 verwendet werden.

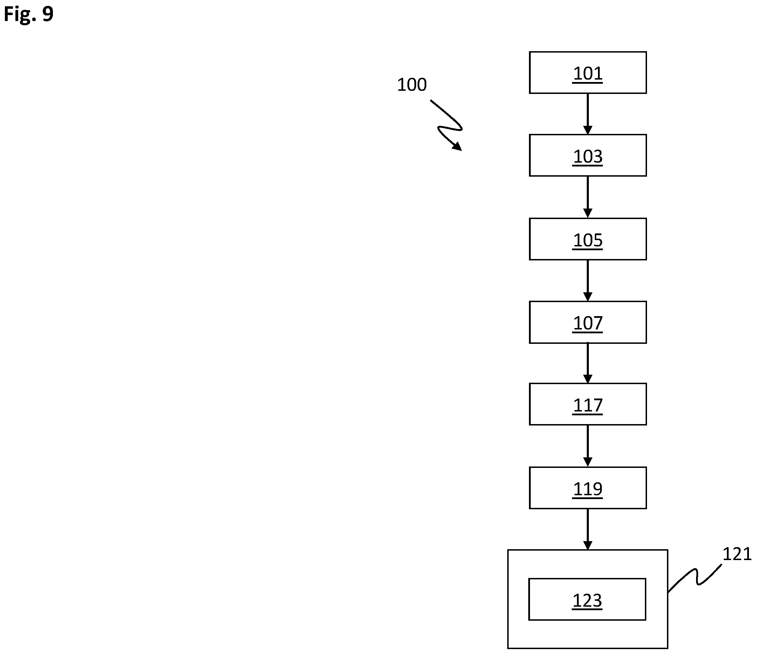

Fig. 9 zeigt ein weiteres Flussdiagramm des Verfahrens 100 zum Steuern eines Planarantriebssystems 200 gemäß einer weiteren Ausführungsform.

Die in Fig. 9 gezeigte Ausführungsform basiert auf der Ausführungsform in Fig. 4 und umfasst alle dort dargestellten Verfahrensschritte. Diese werden im Folgenden nicht erneut detailliert beschrieben.

In der Ausführungsform in Fig. 9 umfasst das Verfahren 100 ferner einen Zuordnungsdatensatzerstellungsschritt 117, in dem ein Datensatz erstellt wird, in dem die Positionszuordnungsfunktion 205 und/oder Zuordnungen zwischen Werten des Läufermagnetfels 402 für verschiedene Magnetfeldsensoren 501 des Sensormoduls 400 gespeichert sind. Der Zuordnungsdatensatz kann in der Steuereinheit 201 des Planarantriebssystems 200 gespeichert sein. Alternativ kann der Zuordnungsdatensatz in einer entsprechenden Speichereinheit und/oder Prozessoreinheit des Läufers 400 gespeichert sein. Alternativ kann der Zuordnungsdatensatz in einer externen Speichereinheit und/oder Prozessoreinheit, beispielsweise einem externen Server, gespeichert sein.

Ferner umfasst das Verfahren einen Läufermagnetfelddatensatzerstellungsschritt 119, in dem ein Läufermagnetfelddatensatz erstellt wird, in dem die im Läufermagnetfeldvermessungsschritt 109 aufgenommenen Messwerte der dreidimensionalen Vermessung des Läufermagnetfelds 402 gespeichert sind. Der Läufermagnetfelddatensatz kann in der Steuereinheit 201 des Planarantriebssystems 200 gespeichert sein. Alternativ kann der Läufermagnetfelddatensatz in einer entsprechenden Speichereinheit und/oder Prozessoreinheit des Läufers 400 gespeichert sein. Alternativ kann der Läufermagnetfelddatensatz in einer externen Speichereinheit und/oder Prozessoreinheit, beispielsweise einem externen Server, gespeichert sein.

Das vorliegende Verfahren 100 ist auf ein Planarantriebssystem 200 mit einer Mehrzahl von Läufern 400 und einer Mehrzahl von Statormodulen 300 anwendbar. Bei einer Mehrzahl von Läufern 400 kann für jeden Läufer 400 eine Vermessung des Läufermagnetfelds 402 im Läufermagnetfeldvermessungsschritt 109 durchgeführt und entsprechend ein Läufermagnetfelddatensatz erstellt werden. Ferner kann für jeden Läufer 400 eine Positionszuordnungsfunktion, insbesondere ein individuell trainiertes Neuronales Netz, generiert und entsprechend ein Zuordnungsdatensatz erstellt werden. Alternativ kann für mehrere Läufer 400 ein gemeinsames, für die mehreren Läufer trainiertes Neuronales Netz verwendet werden.

Ferner umfasst das Verfahren 100 einen Läuferidentifizierungsschritt 121, in dem auf Basis des Läufermagnetfelds 402 der jeweilige Läufer 400 durch entsprechende Messungen durch die Magnetfeldsensoren 501 des Sensormoduls 500 eindeutig identifiziert wird. Aufgrund der individuellen Vermessung des Läufermagnetfelds 402 für jeden Läufer 400 des Planarantriebssystems 200 kann durch Messung des Läufermagnetfelds 402 durch Magnetfeldsensoren 501 des Sensormoduls 400 jeder Läufer 400 des Planarantriebssystems 200 eindeutig identifiziert werden

Hierzu umfasst der Läuferidentifizierungsschritt 121 einen Vergleichsschritt 123, in dem die im Läufermagnetfeldbestimmungsschritt 103 gemessenen Messwerte des Läufermagnetfelds 401 mit der im Läufermagnetfeldvermessungsschritt 109 aufgenommenen Mehrzahl von Messwerten des Läufermagnetfelds 401 verglichen werden. Hierzu können individuellen Läufermagnetfelddatensätze der einzelnen Läufer 400 herangezogen werden.

### Bezugszeichenliste

- 100: Verfahren zum Steuern eines Planarantriebssystems
- 101: Zuordnungsgenerierungsschritt
- 103: Läufermagnetfeldbestimmungsschritt
- 105: Messwertanalyseschritt
- 107: Positionsbestimmungsschritt
- 109: Läufermagnetfeldvermessungsschritt
- 111: Sensorwertbestimmungsschritt
- 113: Trainingsschritt
- 115: Magnetfeldsensorauswahlschritt
- 117: Zuordnungsdatensatzerstellungsschritt
- 119: Läufermagnetfelddatensatzerstellungsschritt
- 121: Läuferidentifizierungsschritt
- 123: Vergleichsschritt

- 200: Planarantriebssystem
- 201: Steuereinheit
- 203: Datenverbindung
- 205: Positionszuordnungsfunktion

- 300: Statormodul
- 301: Träger
- 303: Statoroberfläche
- 305: Statormodulgehäuse
- 307: Statoreinheit
- 309: Statorleiter
- 311: Statorleiterzwischenraum
- 313: Schnittebene

- 400: Läufer
- 401: Magnetanordnung
- 402: Läufermagnetfeld
- 403: Freifläche
- 405: Befestigungsstruktur
- 407: erste Läuferrichtung
- 409: zweite Läuferrichtung
- 411: dritte Läuferrichtung
- 412: Magneteinheit
- 413: erste Magneteinheit
- 415: zweite Magneteinheit
- 417: dritte Magneteinheit
- 419: vierte Magneteinheit
- 420: Positionsbereich
- 421: erster Positionsbereich
- 422: zweiter Positionsbereich
- 423: Bewegungsspur
- 425: Magnet

- P1: erste Position
- P2: zweite Position

- 500: Sensormodul
- 501: Magnetfeldsensor
- 502: Raumbereich
- 503: erstes periodisches Gitter
- 505: zweites periodisches Gitter
- 507: erste Richtung
- 509: zweite Richtung
- 511: erster Magnetfeldsensor
- 513: zweiter Magnetfeldsensor

- 600: Magnetfeldmessanordnung
- 601: Magnetfeldsensoreinheit

## Patentansprüche

1. Verfahren (100) zum Steuern eines Planarantriebssystems (200), wobei das Planarantriebssystem (200) wenigstens eine Steuereinheit (201), ein Statormodul (300) und einen Läufer (400) umfasst, wobei das Statormodul (300) eingerichtet ist, zum elektrischen Steuern des Läufers (400) Statormagnetfelder zu generieren, wobei der Läufer (400) eine Magnetanordnung (401) zum Generieren eines Läufermagnetfelds (402) aufweist, wobei über die Statormagnetfelder und das Läufermagnetfeld (402) eine magnetische Kopplung zwischen dem Läufer (400) und dem Statormodul (300) erzielbar ist, wobei das Statormodul (300) zum Bestimmen einer Position des Läufers (400) ein Sensormodul (500) mit einer Mehrzahl von Magnetfeldsensoren (501) umfasst, wobei die Magnetfeldsensoren (501) in einer zweidimensionalen Anordnung am Statormodul (300) angeordnet sind, und wobei jeder Magnetfeldsensor (501) eingerichtet ist, für einen Raumbereich in der zweidimensionalen Anordnung das Läufermagnetfeld (402) zu bestimmen, umfassend:
Generieren einer Positionszuordnungsfunktion (205) in einem Zuordnungsgenerierungsschritt (101), wobei die Positionszuordnungsfunktion (205) eingerichtet ist, einer Mehrzahl von Messwerten des Läufermagnetfelds (402) einer Mehrzahl von Magnetfeldsensoren 501 des Sensormoduls (500) eine Positionen des Läufers (400) relativ zum Statormodul (300) zuzuordnen;
Messen einer Mehrzahl von Messwerten des Läufermagnetfelds (402) durch Magnetfeldsensoren (501) des Sensormoduls (500) für eine Position des Läufers (400) relativ zum Statormodul (300) in einem Läufermagnetfeldbestimmungsschritt (103);
Anwenden der Positionszuordnungsfunktion auf die Mehrzahl von Messwerten des Läufermagnetfelds (402) der Magnetfeldsensoren (501) des Sensormoduls (500) in einem Messwertanalyseschritt (105); und
Bestimmen der Position des Läufers (400) relativ zum Statormodul (300) durch die Positionszuordnungsfunktion (205) in einem Positionsbestimmungsschritt (107).

2. Verfahren nach Anspruch 1, wobei der Zuordnungsgenerierungsschritt (101) umfasst:
Messen einer Mehrzahl von Messwerten des Läufermagnetfelds (402) durch eine Magnetfeldmessanordnung (600) in einem Läufermagnetfeldvermessungsschritt (109), wobei durch die Mehrzahl von Messwerten des Läufermagnetfelds (402) eine dreidimensionale Vermessung des Läufermagnetfelds (402) bestimmt ist; und
Bestimmen auf Basis der dreidimensionalen Vermessung des Läufermagnetfelds (402) einer Mehrzahl von Werten des Läufermagnetfelds (402) für eine Mehrzahl von Magnetfeldsensoren (501) des Sensormoduls (500) für eine Mehrzahl von Positionen des Läufers (400) relativ zum Statormodul (300) in einem Sensorwertbestimmungsschritt (111), wobei für jede der Mehrzahl von Positionen des Läufers (400) relativ zum Statormodul (300) jedem Magnetfeldsensor (501) der Mehrzahl von Magnetfeldsensoren (501) des Sensormoduls (500) gemäß der dreidimensionalen Vermessung des Läufermagnetfelds (402) ein Wert des Läufermagnetfelds (402) zugeordnet wird.

3. Verfahren nach Anspruch 2, wobei im Läufermagnetfeldvermessungsschritt (109) die dreidimensionale Vermessung des Läufermagnetfelds (402) durch eine dreidimensionale Anordnung diskreter Messpunkte des Läufermagnetfelds (402) realisiert ist.

4. Verfahren nach Anspruch 2 oder 3, wobei die Magnetfeldmessanordnung (600) in drei Raumdimensionen verfahrbar ist und eine einzelne Magnetfeldsensoreinheit (601) und/oder eine eindimensionale Anordnung von Magnetfeldsensoreinheiten (601) und/oder eine zweidimensionale Anordnung von Magnetfeldsensoreinheiten (601) und/oder eine dreidimensionale Anordnung von Magnetfeldsensoreinheiten (601) umfasst, und wobei die dreidimensionale Anordnung diskreter Messpunkte durch Messungen der Magnetfeldsensoreinheiten (601) der in drei Raumdimensionen verfahrbaren Magnetfeldsensoranordnung (600) realisiert wird.

5. Verfahren nach Anspruch 2, 3 oder 4, wobei die dreidimensionale Vermessung des Läufermagnetfelds (402) eine Modellbeschreibung der dreidimensionalen Anordnung diskreter Messpunkte umfasst, und wobei die Modellbeschreibung eine Interpolation der dreidimensionalen Anordnung diskreter Messpunkte umfasst.

6. Verfahren nach einem der voranstehenden Ansprüche, wobei der Läufermagnetfeldbestimmungsschritt (103) umfasst:
Auswählen von Magnetfeldsensoren (501) aus den Magnetfeldsensoren (501) des Sensormoduls (500) zum Bestimmen des Läufermagnetfelds (402) in einem Magnetfeldsensorauswahlschritt (115), wobei eine Bestimmung des Sensormagnetfelds auf die ausgewählten Magnetfeldsensoren (501) beschränkt ist.

7. Verfahren (100) nach einem der voranstehenden Ansprüche, wobei die Positionszuordnungsfunktion (205) als ein künstliches neuronales Netz ausgebildet ist, ferner umfassend:
Trainieren des Neuronalen Netzes auf die im Sensorwertbestimmungsschritt (111) für die Mehrzahl von Positionen des Läufers (400) relative zum Statormodul (300) bestimmten Werte des Läufermagnetfelds (402) für die Mehrzahl von Magnetfeldsensoren (501) des Sensormoduls (500) in einem Trainingsschritt (113), wobei durch das Training das Neuraonale Netz eingerichtet ist, auf Basis der im Sensorwertbestimmungsschritt (111) für die Mehrzahl von Positionen des Läufers (400) relativ zum Statormodul (300) bestimmten Werte des Läufermagnetfelds (402) den im Läufermagnetfeldbestimmungsschritt (103) gemessenen Mehrzahl von Messwerten des Läufermagnetfelds (402) eine Position des Läufers (400) relativ zum Statormodul (300) zuzuordnen.

8. Verfahren (100) nach einem der voranstehenden Ansprüche, wobei das Planarantriebssystem (200) wenigstens einen weiteren Läufer umfasst, wobei der weitere Läufer ein weiteres Läufermagnetfeld (402) aufweist, ferner umfassend:
Generieren einer weiteren Positionszuordnungsfunktion (205) im Zuordnungsgenerierungsschritt (101), wobei die weitere Positionszuordnungsfunktion (205) eine Mehrzahl von weiteren Zuordnungen zwischen Positionen des weiteren Läufers (400) relativ zum Statormodul (300) und Messwerten des weiteren Läufermagnetfelds (402) von einer Mehrzahl von Magnetfeldsensoren (501) des Sensormoduls (500) umfasst, und wobei in jeder weiteren Zuordnung der weiteren Positionszuordnungsfunktion (205) für eine Position des weiteren Läufers (400) relativ zum Statormodul (300) jedem Magnetfeldsensor (501) der Mehrzahl von Magnetfeldsensoren (501) des Sensormoduls (500) eindeutig ein Wert des weiteren Läufermagnetfelds (402) zugeordnet ist;
Messen einer Mehrzahl von Messwerten des weiteren Läufermagnetfelds (402) durch Magnetfeldsensoren (501) des Sensormoduls (500) für eine Position des weiteren Läufers (400) relativ zum Statormodul (300) im Läufermagnetfeldbestimmungsschritt (103);
Anwenden der weiteren Positionszuordnungsfunktion auf die Mehrzahl von Messwerten des weiteren Läufermagnetfelds (402) der Magnetfeldsensoren (501) im Messwertanalyseschritt (105), wobei in jeder weiteren Zuordnung der weiteren Positionszuordnungsfunktion (205) für eine Position des weiteren Läufers (400) relativ zum Statormodul (300) jedem Magnetfeldsensor (501) der Mehrzahl von Magnetfeldsensoren (501) des Sensormoduls (500) eindeutig ein Wert des weiteren Läufermagnetfelds (402) zugeordnet ist; und Bestimmen der Position des weiteren Läufers (400) relativ zum Statormodul (300) auf Basis der von den Magnetfeldsensoren (501) gemessenen Messwerte des weiteren Läufermagnetfels und auf Basis der weiteren Zuordnungen der weiteren Positionszuordnungsfunktion (205) im Positionsbestimmungsschritt (107).

9. Verfahren (100) nach einem der voranstehenden Ansprüche, ferner umfassend:
Erstellen eines Zuordnungsdatensatzes in einem Zuordnungsdatensatzerstellungsschritt (117), wobei der Zuordnungsdatensatz die im Zuordnungsgenerierungsschritt (101) bestimmte Positionszuordnungsfunktion (205) und/oder entsprechende Zuordnungen zwischen Positionen des Läufers (400) relativ zum Statormodul (300) und Messwerten des Läufermagnetfelds (402) von einer Mehrzahl von Magnetfeldsensoren (501) des Sensormoduls (500) umfasst.

10. Verfahren (100) nach einem der voranstehenden Ansprüche, ferner umfassend:
Erstellen eines Läufermagnetfelddatensatzes in einem Läufermagnetfelddatensatzerstellungsschritt (119), wobei der Läufermagnetfelddatensatz die im Läufermagnetfeldvermessungsschritt (109) aufgenommenen Messwerte des Läufermagnetfelds (402) umfasst.

11. Verfahren (100) nach einem der voranstehenden Ansprüche, ferner umfassend:
Identifizieren des Läufers (400) anhand des individuellen Läufermagnetfelds (401) des Läufers (400) in einem Läuferidentifizierungsschritt (121), wobei die Läuferidentifizierungsschritt umfasst:
Vergleichen der im Läufermagnetfeldbestimmungsschritt (103) gemessenen Mehrzahl von Messwerten des Läufermagnetfelds (401) mit der im Läufermagnetfeldvermessungsschritt (109) aufgenommenen Mehrzahl von Messwerten des Läufermagnetfelds (401) in einem Vergleichsschritt (123).

12. Planarantriebssystem (200) mit wenigstens einer Steuereinheit (201), einem Statormodul (300), einem Läufer (400) und einer Magnetfeldmessanordnung, wobei die Steuereinheit über wenigstens eine Datenverbindung mit dem Statormodul (300) verbunden ist, wobei das Statormodul (300) eine Mehrzahl von elektrisch bestrombaren Statorleitern (309) zum Erzeugen von Statormagnetfeldern zum elektrischen Steuern des Läufers (400) umfasst, wobei der Läufer (400) eine Magnetanordnung (401) zum Generieren eines Läufermagnetfelds (402) aufweist, wobei über das Statormagnetfeld und das Läufermagnetfeld (402) eine magnetische Kopplung zwischen dem Läufer (400) und dem Statormodul (300) erzielbar ist, wobei das Statormodul (300) zum Bestimmen einer Position des Läufers (400) ein Sensormodul (500) mit einer Mehrzahl von Magnetfeldsensoren (501) umfasst, wobei die Magnetfeldsensoren (501) in einer zweidimensionalen Anordnung am Statormodul (300) angeordnet sind, wobei jeder Magnetfeldsensor (501) eingerichtet ist, für einen Raumbereich in der zweidimensionalen Anordnung das Läufermagnetfeld (402) zu bestimmen, und wobei die Steuereinheit (201) eingerichtet ist, ein Verfahren (100) nach einem der voranstehenden Ansprüche 1 bis 11 auszuführen.
